# EUROPÄISCHE PATENTSCHRIFT

(11) **EP 3 486 161 B1**
(45) Veröffentlichungstag und Bekanntmachung des Hinweises auf die Patenterteilung: **29.09.2021**
(21) Anmeldenummer: 18206208.3
(22) Anmeldetag: 14.11.2018
(51) Int. Cl.: B64C 1/18, B64D 11/06

(54) **BODENBAUGRUPPE MIT MONOLITHISCHEM BODENELEMENT SOWIE LUFTFAHRZEUGBEREICH UND LUFTFAHRZEUG MIT EINER BODENBAUGRUPPE**
FLOOR MODULE WITH MONOLITHIC FLOOR ELEMENT AND AIRCRAFT AREA AND AIRCRAFT COMPRISING A FLOOR MODULE
MODULE DE PLANCHER POURVU D'ÉLÉMENT DE PLANCHER MONOLITHIQUE AINSI QUE ZONE D'AÉRONEF ET AÉRONEF DOTÉ D'UN MODULE DE PLANCHER

(30) Priorität: 15.11.2017 DE 102017220378
(43) Veröffentlichungstag der Anmeldung: 22.05.2019
(73) Patentinhaber: Airbus Operations GmbH, 21129 Hamburg (DE)
(72) Erfinder: Roth, Ingo, 21129 Hamburg (DE)
(74) Vertreter: Schornack, Oliver

(56) Entgegenhaltungen:
- EP-A2- 0 922 632
- WO-A1-98/09860
- WO-A1-2007/033640
- DE-A1- 3 141 869
- DE-C1- 4 102 274
- FR-A1- 2 930 521
- FR-A1- 2 937 303
- FR-A1- 2 957 050
- US-A1- 2008 210 820

## Beschreibung

Die vorliegende Erfindung betrifft eine Bodenbaugruppe mit einem monolithischen selbsttragenden Bodenelement, einen Luftfahrzeugbereich mit solch einer Bodenbaugruppe, ein Luftfahrzeug mit solch einem Luftfahrzeugbereich sowie die Verwendung einer Bodenbaugruppe zur Installation eines Kabinenbodens in einem Luftfahrzeug. Insbesondere betrifft die vorliegende Erfindung eine Bodenbaugruppe, Luftfahrzeugbereich, Luftfahrzeug und Verwendung einer Bodenbaugruppe, wobei die Bodenbaugruppe ein monolithisch ausgebildetes, selbsttragendes Bodenelement umfasst, welches sich quer zur Längsrichtung des Luftfahrzeugs über einen Bereich zwischen zwei gegenüberliegenden Seiten eines Spants erstreckt.

Derzeitige Kabinenböden in Luftfahrzeugen werden aus Längsträgern und darauf aufgebrachten und befestigten Bodenpaneelen hergestellt. Die Längsträger überspannen meist zwei Tragstrukturen, die im Frachtbereich des Luftfahrzeugs angeordnet sind und gegenüberliegende Seitenwände des Frachtbereichs, die in Längsrichtung des Luftfahrzeugs verlaufen, bilden. Ein Teil dieser Tragstrukturen besteht beispielsweise aus einem quer zur Längsrichtung des Luftfahrzeugs angeordneten horizontalen und vertikalen Träger, wobei der horizontale Träger an einem Spant des Luftfahrzeugs befestigt ist und sich in Richtung Mitte des Luftfahrzeugs hin erstreckt. An dem der Mitte des Luftfahrzeugs zugewandten Ende ist der horizontale Träger auf dem vertikalen Träger gelagert, der wiederum nach unten verläuft und dort an einem tieferen Punkt des Spants des Luftfahrzeugs befestigt ist.

Je nach Anordnung des Kabinenbodens innerhalb des Luftfahrzeugs müssen insbesondere die Bodenpaneele, aber auch die Längsträger, an unterschiedliche Lastfälle angepasst werden. So entstehen in Bereichen, in denen Monumente vorgesehen sind, beispielsweise Küchenbereiche, Toiletten, etc., deutlich höhere Lasten und Momente aufgrund der Einbauten und der im Küchenbereich gelagerten Trolleys mit Speisen und Getränken für die Passagiere, als dies im Sitzbereich der Kabine der Fall ist. Die Passagiersitze sind meist an Sitzschienen befestigt, die auf den Längsträgern des Kabinenbodens gelagert sind. Daher müssen die Bodenpaneele im Sitzbereich der Kabine weniger Lasten aufnehmen.

Um diesen unterschiedlichen Lastfällen gerecht zu werden, aber gleichzeitig den Betreibern des Luftfahrzeugs eine möglichst große Flexibilität bei der Aufteilung der Kabine zu lassen, werden ein oder mehrere Bereiche des Kabinenbodens verstärkt ausgestaltet, sodass die erhöhten Lasten eines Monuments (insbesondere einer Bordküche) getragen werden können. Insbesondere im Eingangsbereich des Luftfahrzeugs, in dem die meisten Monumente vorgesehen sind, wird ein bestimmter Abschnitt (eine sogenannte Flexzone) mit einem stärkeren Kabinenboden versehen. Ein solcher Abschnitt kann sich beispielsweise über mehrere Meter in Längsrichtung des Luftfahrzeugs erstrecken. Dies erlaubt dem Betreiber des Luftfahrzeugs innerhalb der Flexzone Monumente (insbesondere schwere Bordküchen) zu installieren, aber auch Sitzreihen in dem Luftfahrzeug vorzusehen. Die stärkeren Längsträger und stärkeren Bodenpaneele dieser Flexzone weisen naturgemäß ein höheres Gewicht auf.

Das Dokument DE3141869 beschriebt eine Fußbodenkonstruktion für den oberen Laderaum eines Luftfahrzeuges mit annähernd kreisförmigem Rumpfquerschnitt, hauptsächlich bestehend aus in Rumpfquerrichtung verlaufenden seitlich abgestützten Biegeträgern und die Biegeträger tragenden Stützelementen, wobei die Biegeträger als einstückige annähernd über den gesamten Rumpfinnendurchmesser sich erstreckenden Fußbodenplatten ausgebildet sind, und wobei zwischen den seitlichen Rändern der Fußbodenplatten und der Rumpfaußenstruktur eine Verbindung besteht, wodurch vorwiegend in Flugzeug-Längsrichtung wirkende Kräfte übertragen werden und wobei die die Fußbodenplatten tragenden Stützelemente als längs vertikal verlaufende Flächenbauteile ausgebildet sind. Die Dokumente FR2930521, FR2957050, FR2937303, US2008/210820 und WO2007/033640 beschreiben weitere monolithische Bodenelemente.

Die vorliegende Erfindung ist auf die Aufgabe gerichtet, eine Bodenbaugruppe bereitzustellen, die leicht ist und dennoch die notwendige Flexibilität bei der Einteilung der Kabine des Luftfahrzeugs ermöglicht. Des Weiteren ist die vorliegende Erfindung auf die Aufgabe gerichtet, einen Luftfahrzeugbereich sowie ein Luftfahrzeug mit einem entsprechenden Luftfahrzeugbereich bereitzustellen, die eine leichte Bodenbaugruppe umfassen und die notwendige Flexibilität zur Einteilung der Kabine sowie eine schnelle Montage ermöglichen.

Diese Aufgabe wird durch eine Bodenbaugruppe mit den Merkmalen des Anspruchs 1, einem Luftfahrzeugbereich mit den Merkmalen des Anspruchs 12, einem Luftfahrzeug mit den Merkmalen des Anspruchs 14 und einer Verwendung der Bodenbaugruppe mit den Merkmalen des Anspruchs 15 gelöst.

Gemäß einem ersten Aspekt hat eine Bodenbaugruppe für ein Luftfahrzeug mindestens zwei Auflager, die dazu eingerichtet sind, an gegenüberliegenden Seiten eines Spants des Luftfahrzeugs befestigt zu werden. Gemäß der Erfindung weist die Bodenbaugruppe eine Vielzahl von Auflagern auf, die paarweise an gegenüberliegenden

Seiten eines Spants des Luftfahrzeugs befestigt sind. Ein Spant, auch als "Frame" bezeichnet, bildet einen Teil des Rumpfs des Luftfahrzeugs und ist im Wesentlichen senkrecht zu einer Längsachse des Luftfahrzeugs angeordnet, und bildet demnach einen Querschnitt des Rumpfs des Luftfahrzeugs. Der Spant kann sich über den gesamten Umfang des Rumpfs erstrecken oder zumindest über den überwiegenden Teil des Umfangs erstrecken. Beispielsweise kann der Spant an einem den Rumpfboden bildenden Element des Luftfahrzeugs beidseitig anschließen.

Die mindestens zwei Auflager bzw. die Vielzahl von paarweise angeordneten Auflagern können alternativ auch jeweils an einem Stringer an gegenüberliegenden Seiten des Luftfahrzeugs befestigt sein, was aber nicht beansprucht wird.

Ein Stringer bildet ebenfalls einen Teil des Rumpfs des Luftfahrzeugs und verläuft im Wesentlichen parallel zur Längsachse des Luftfahrzeugs. Auf einer Vielzahl von Stringer ist meist die Außenhaut des Luftfahrzeugs angeordnet und befestigt, während die Spanten im Wesentlichen die Querschnittsform des Rumpfs des Luftfahrzeugs bilden und die Stringer versteifen.

Ferner umfasst die Bodenbaugruppe ein monolithisches selbsttragendes Bodenelement bestehend aus mindestens zwei Längsträgern, einer auf den Längsträgern angeordneten Bodenplatte und jeweils einem an jedem Ende jedes der Längsträger angeordneten Anschlusselement. Unter monolithischem Bodenelement ist hier ein Bodenelement zu verstehen, dass im fertigen Zustand ein Bauteil darstellt, welches nicht zerstörungsfrei in einzelne Bestandteile zerlegt werden kann. Selbstverständlich kann das monolithische Bodenelement aus einzelnen Komponenten hergestellt werden, die so miteinander verbunden werden, dass sie ein monolithisches Bodenelement Formen. Beispielsweise können die einzelnen Komponenten durch Verschweißen, Verkleben und/oder Vernieten zusammengefügt werden oder in Form einer Vielzahl von Pre-Pregs (vorgefertigten Faserverbundbauteilen), die zusammengesetzt und anschließend zusammen ausgehärtet werden, zu dem monolithischen Bauelement zusammengefügt werden.

Das Bodenelement kann an dem Spant durch Befestigen jedes Anschlusselements an einem entsprechenden Auflager befestigt sein. Das Auflager kann direkt an dem Spant befestigt sein. Alternativ kann das Auflager in dem Spant integriert sein, also einstückig mit dem übrigen Spant gebildet sein. Das Auflager ist dabei möglichst klein dimensioniert, sodass die Bodenbaugruppe zwar daran befestigt werden kann, jedoch ohne unnötig weit in das Innere des Rumpfes des Luftfahrzeugs hineinzuragen. Beispielsweise kann sich das Auflager lediglich 5 cm bis 10 cm in Y-Richtung (also parallel zur Querachse des Luftfahrzeugs) von dem Spant in das Innere des Rumpfes erstrecken. Dadurch lassen sich Hebelkräfte durch den Krafteintrag von der Bodenbaugruppe in die Rumpfstruktur des Luftfahrzeugs verringern.

In einer Variante können die Anschlusselemente des Bodenelements an dem jeweiligen Auflager lösbar befestigt sein. Beispielsweise können Schraub- und/oder Steckverbindungen zwischen Anschlusselement und Auflager vorgesehen sein, die jederzeit zerstörungsfrei gelöst werden können. Ebenso können Steckverbindungen mit Sicherungsstift vorgesehen sein, die jederzeit durch Lösen des Sicherungsstifts und/oder Entnahme eines Bolzens gelöst werden können.

Ferner erstreckt sich die Bodenplatte im Wesentlichen vollständig über den Bereich zwischen den gegenüberliegenden Seiten des Spants. Dabei überdecken die Bodenplatte die Auflager zumindest teilweise. Die Bodenplatte erstreckt sich auch in Richtung der Längsträger mindestens zwischen zwei paarweise befestigten Auflagern. Die Längsträger können dabei länger als die Bodenplatte sein und unter der Bodenplatte hervorschauen.

Aufgrund des selbsttragenden Bodenelements können die Auflager klein dimensioniert werden und können eine geringe Ausdehnung in den Innenraum des Luftfahrzeugs aufweisen. Dies erlaubt ferner, dass die Bodenbaugruppe, und insbesondere die Bodenplatte, den gesamten Raum zwischen den zwei gegenüberliegenden Auflagern einnimmt bzw. ausfüllt, sich also (nahezu) über den gesamten Innenraum des Luftfahrzeugs durchgängig erstreckt (quer zur Längsrichtung des Luftfahrzeugs betrachtet). Mit anderen Worten kann die Bodenplatte den gesamten Zwischenraum im Inneren des Luftfahrzeugs zwischen zwei gegenüberliegenden Auflagern entweder nahezu oder vollständig einnehmen.

Im Gegensatz zu bisherigen Bodenkonstruktionen mit Bodenpaneelen kann dadurch die Anzahl der aneinander angrenzenden Bodenpaneele und somit die Anzahl der notwendigen Dichtungen zwischen Bodenpaneelen verringert werden. So lässt das monolithische Bodenelement eine durchgängige Bodenplatte zu, die ohne in Querrichtung des Bodenelements verlaufende Fugen (in Längsrichtung des Luftfahrzeugs verlaufende Fugen) auskommt. Da das Einbringen von Dichtungsmaterial meist mit einer Aushärtezeit des Fugenmaterials verbunden ist, wird die Herstellungszeit eines Kabinenbodens mit dem hier beschriebenen monolithischen Bodenelement deutlich reduziert und die Schadensanfälligkeit des Kabinenbodens reduziert.

Das monolithische Bodenelement verringert nicht nur das Gewicht der Bodenbaugruppe, sondern reduziert auch die Anzahl benötigter Komponenten für das Herstellen eines Kabinenbodens. Bisherige Kabinenböden wurden aus mehreren Elementen (beispielsweise Längsträger und Bodenpaneele) zusammengesetzt, die im Luftfahrzeugrumpf miteinander verschraubt, genietet und/oder verklebt werden mussten. Diese im Luftfahrzeugrumpf vorzunehmenden Arbeitsschritte entfallen vollständig bei der hier beschriebenen Bodenbaugruppe. Zudem kann das monolithische Bodenelement vorgefertigt werden und erst später vollständig in das Luftfahrzeug eingebaut werden. Zusätzlich können auch identische Auflager in dem ganzen Luftfahrzeug eingesetzt werden, unabhängig von der Lage innerhalb des Luftfahrzeugs. Dadurch muss nur ein Auflagertyp hergestellt und vorgehalten werden, der bei jedem Bodentyp des Luftfahrzeugs eingesetzt werden kann. Beispielsweise kann das gleiche Auflager für einen Kabinenboden oder einen Frachtraumboden und in Längsrichtung des Luftfahrzeugs für jeden Bereich, unabhängig von der späteren Nutzung des Bereichs, verwendet werden.

In einer Variante kann das monolithische Bodenelement zumindest abschnittsweise aus einem Verbundwerkstoff hergestellt sein. Beispielsweise kann das monolithische Bodenelement aus einem faserverstärkten Kunststoff einstückig hergestellt werden. Dies erhöht auch die Festigkeit des Bodenelements gegen Schlagkräfte, wie zum Beispiel auf das Bodenelement aufprallende Gegenstände (Werkzeug, Gepäckstücke, Küchenutensilien, etc.).

Alternativ oder zusätzlich kann die Bodenplatte an mindestens einem ihrer den Anschlusselementen zugewandten Enden einen Fußwinkel aufweisen. Ein Fußwinkel ist ein sich nach oben (von dem Längsträger weg) erstreckendes Ende der Bodenplatte. Dieser Fußwinkel - auch als Dado-Winkel bezeichnet - kann mit einem Seitenpaneel oder Dado-Paneel der Innenverkleidung des Luftfahrzeugs überlappen, daran anschließen und/oder damit verbunden werden. Somit lässt sich eine abgeschlossene Kabinenverkleidung des Luftfahrzeugs schnell und einfach herstellen. Da die Bodenplatte sich sehr nah an die Spante des Luftfahrzeugrumpfes erstreckt, kann die Verbindung mit der Seitenverkleidung (Dado-Paneel) leicht hergestellt werden. Der Fußwinkel kann senkrecht zur Bodenplatte angeordnet sein. Alternativ kann der Fußwinkel auch nicht-rechtwinklig zu der Bodenplatte angeordnet sein, beispielsweise mit einem Winkel zwischen 90° und 120°, bevorzugt zwischen 95 und 110° und insbesondere 105°. Der Winkel zwischen Bodenplatte und Fußwinkel kann an eine Krümmung der Spante und/oder Krümmung der Seitenverkleidung (Dado-Paneel) im Bereich knapp oberhalb des Bodenelements angepasst sein.

In einer Ausgestaltung der Bodenbaugruppe kann das monolithische Bodenelement mindestens einen Querträger umfassen, der senkrecht zu den Längsträgern angeordnet ist. Auch der mindestens eine Querträger kann integral mit den übrigen Bestandteilen des Bodenelements ausgebildet sein. Auch dies verringert die Herstellungszeit des Kabinenbodens. Die Bodenplatte ist auch auf dem Querträger angeordnet, sodass sich ein durchgängiger ebener Boden durch die Bodenbaugruppe bewerkstelligen lässt. Ferner ist der Querträger mit dem Längsträger des Bodenelements derart verbunden, dass Lasten des Querträgers in den Längsträger abgeleitet werden.

Alternativ oder zusätzlich kann das monolithische Bodenelement eine oder mehrere Traversen umfassen. Eine Traverse bildet eine weitere schräg zu dem Längsträger verlaufende tragende Komponente des selbsttragenden Bodenelements. Dabei kann die Traverse lediglich eine Versteifung der Bodenplatte darstellen (zur Reduzierung von Schwingungen) oder zusätzlich mit dem Längsträger derart verbunden sein, dass Lasten der Traverse in den Längsträger abgeleitet werden. Auch die Traverse kann integral mit den übrigen Bestandteilen des Bodenelements ausgebildet sein. Im Fall einer Ausgestaltung mit Querträger verläuft die Traverse auch schräg zu dem Querträger und kann optional mit dem Querträger verbunden sein, um Lasten in der Querträger zu übertragen.

In einer weiteren Ausgestaltung kann der Längsträger (sowie der optionale Querträger und die optionale Traverse) unterhalb der Bodenplatte angeordnet sein. Dabei kann eine Unterkante des Längsträgers relativ zu der Bodenplatte einen rechteckigen, dreieckigen, ellipsoiden oder parabolischen Verlauf aufweisen. Die Form des Längsträgers kann dabei an die zu tragenden Kräfte angepasst sein. Alternativ oder zusätzlich kann die Form des Längsträgers an unterhalb der Bodenbaugruppe angeordnete oder installierte Gegenstände angepasst sein, um ausreichend Platz dafür zu bieten. Beispielsweise kann sich die Unterkante des Längsträgers von einem Auflager zur Mitte des Längsträgers hin linear oder gekrümmt von der Bodenplatte wegbewegen, bis eine maximale Höhe des Längsträgers erreicht ist. Von dort kann die Unterkante des Längsträgers parallel zur Bodenplatte verlaufen. Dabei kann die Unterkante eine symmetrische Form in Bezug auf eine Mittelebene der Bodenbaugruppe, die senkrecht zur Längsachse des Längsträgers steht, aufweisen. Der parallele Verlauf der Unterkante des Längsträgers kann sich über einen Bereich des Bodenelements erstrecken, der oberhalb eines Frachtraums oder anderem Raum in dem Luftfahrzeug angeordnet sein wird, sodass eine einheitliche Deckenhöhe des (Fracht-) Raums erzielt werden kann.

So kann der Längsträger mindestens einen Steg aufweisen. Im Fall mehrerer Stege verlaufen diese im Wesentlichen parallel zueinander und parallel zu der Längsachse des Bodenelements. Ein Steg kann entlang seines Verlaufs in Längsrichtung des Bodenelements eine unterschiedliche Ausdehnung in Z-Richtung (senkrecht zur Längsrichtung und Querrichtung des Bodenelements) aufweisen. Beispielsweise kann ein Steg seine größte Ausdehnung in Z-Richtung in der Mitte des Bodenelements (in Längsrichtung betrachtet) aufweisen, wo die größten Biegemomente des Bodenelements vorherrschen. Bei der Anordnung mehrerer paralleler Stege können diese untereinander eine unterschiedliche Ausdehnung in Z-Richtung aufweisen oder alle die gleiche Ausdehnung in Z-Richtung aufweisen. Beispielsweise kann bei drei parallelen Stegen ein mittlerer eine größere Ausdehnung in Z-Richtung aufweisen als die beiden daneben angeordneten Stege. Ebenso kann in einem mittleren Bereich des Bodenelements eine konstante Ausdehnung in Z-Richtung vorliegen, um eine durchgängig gleiche Höhe eines Raums unterhalb der Unterkante der Stege zu erhalten.

Optional kann auch ein der Bodenplatte gegenüberliegender Flansch einen Teil des Längsträgers bilden. Der Flansch kann dabei integral mit dem einen oder den mehreren Stegen ausgebildet sein. Im Fall mehrerer Stege kann der Flansch in Querrichtung des Bodenelements die äußeren Stege überragen oder nur den Zwischenraum zwischen den Stegen überdecken.

Alternativ oder zusätzlich kann ein Bereich des Längsträgers zwischen dem Steg und der Bodenplatte eine Verstärkung aufweisen. Die Verstärkung kann beispielsweise auf einer oder beiden Seiten eines oder mehrerer Stege (in Querrichtung des Bodenelements betrachtet) angeordnet sein oder dort integral mit dem Steg ausgebildet sein. Eine Verstärkung kann in Form von Rippen, einem aussteifenden Schaum und/oder einer Bienenwabenstruktur ausgebildet sein. In jedem Fall verhindert oder verringert die Verstärkung die Gefahr einer Dehnung oder eines Reißens sowie eines Ausbeulens des Stegs des Längsträgers.

Die zwei Längsträger (oder optional mehr als zwei Längsträger) des Bodenelements können innerhalb eines mittleren Bereichs der Bodenplatte angeordnet sein. Mit anderen Worten ragt die Bodenplatte in Längsrichtung des Bodenelements betrachtet über den jeweiligen Längsträger rechts bzw. links hinaus. Ebenso können die Längsträger auch an gegenüberliegenden Seiten des Bodenelements angeordnet sein, also an den Längsseiten oder Längskanten der Bodenplatte angeordnet sein. Dabei ist jeder Längsträger an zwei Auflagern befestigt. Beispielsweise lassen sich an einem Spant oder Stringer Auflager vorsehen oder darin integrieren, an denen jeweils zwei Anschlusselemente zweier in Längsrichtung des Luftfahrzeugs nebeneinander angeordneter Bodenbaugruppen befestigt werden können. Somit ist jedes selbsttragende Bodenelement gegen Verkippen gesichert, während die Auflager möglichst einfach zur Aufnahme von Lasten in Z-Richtung ausgestaltet sein können.

In einer alternativen Variante weist das Bodenelement einen einzelnen Längsträger auf, der beispielsweise mittig unter der Bodenplatte angeordnet ist. Ein so geformtes Bodenelement weist eine T-förmige Querschnittsform auf. Der Vorteil eines solchen Bodenelements liegt in dem geringeren Gewicht. Allerdings muss das Bodenelement gegen ein Verkippen (um die Y-Achse des Luftfahrzeugs, also die Längsachse des Bodenelements) an mindestens einem der Auflager gesichert sein. Alternativ oder zusätzlich können die Bodenelemente mehrerer in Längsrichtung des Luftfahrzeugs nebeneinander angeordneter Bodenbaugruppen auch miteinander in kraftübertragender Weise verbunden werden, wodurch ein Verkippen der Bodenelemente ebenfalls verhindert wird. Hierfür können Verbindungselemente an den Seitenkanten (oder Seitenbereichen unterhalb der Bodenplatte) des Bodenelements vorgesehen sein, die mit entsprechenden Verbindungselementen angrenzender Bodenelemente eine kraftschlüssige und/oder formschlüssige, kraftübertragende Verbindung herstellen.

In einer Ausgestaltungsvariante kann der Steg einen in Längsrichtung des mindestens einen Längsträgers verlaufenden Schlitz umfassen. Der Schlitz stellt eine Aussparung oder Öffnung im Steg dar. Dabei hat der Schlitz in Längsrichtung des Längsträgers eine größere Ausdehnung als in einer Richtung senkrecht zur Bodenplatte. Beispielsweise kann der Schlitz eine Höhe (Ausdehnung in Richtung senkrecht zur Bodenplatte) von 3 bis 10 mm aufweisen, bevorzugt kann der Schlitz eine Höhe von 5 mm aufweisen. Der Schlitz kann sich mittig in Längsrichtung des Längsträgers befinden und eine Länge (Ausdehnung in Längsrichtung des Längsträgers) aufweisen, die einer Breite eines Passagiergangs in einem Luftfahrzeug entspricht. Der Schlitz ist insbesondere dort im Steg angeordnet, wo sich später ein Passagiergang befindet. Selbstverständlich können auch mehrere Schlitze in Längsrichtung des Längsträgers angeordnet sein, beispielsweise wenn mehr als ein Passagiergang auf der Bodenplatte des Bodenelements vorgesehen ist. Insbesondere ist ein Schlitz dort nicht vorgesehen, wo sich Sitzschienen in dem Bodenelement befinden.

Der Schlitz ermöglicht es, Schwingungen aus der Bodenplatte, die sich in den Steg fortsetzen, zu dämpfen. Insbesondere werden Schwingungen aus der Bodenplatte vermindert oder gar nicht in Bereiche des Bodenelements übertragen, in denen Sitze (mithilfe von Sitzschienen) befestigt werden. Aufgrund des monolithischen Bodenelements können gehende Passagiere (mit rollendem Gepäck) oder Kabinenpersonal (mit Trolley), insbesondere beim Übergang von einer Bodenplatte zur nächsten, Querkraftschwingungen (in der Ebene eines Stegs des Längsträgers) auslösen, die sich über das übrige Bodenelement und die Sitzschienen in darin befestigte Sitze übertragen. Dies ist für die sitzenden Passagiere unangenehm.

Eine weitere Schwingungsdämpfung kann in Form eines Dämpfungselements erzielt werden, das sich unterhalb der Bodenplatte in dem mindestens einen Bereich, in dem ein Passagiergang bzw. Schlitz im Längsträger vorgesehen ist, befindet. Das Dämpfungselement kann beispielsweise plattenförmig auf einer Unterseite der Bodenplatte befestigt sein oder in die Bodenplatte integriert sein. Beispielsweise kann das Dämpfungselement zwischen den zwei Längsträgern vorgesehen sein und sich in Längsrichtung des Bodenelements soweit erstrecken, wie der Schlitz vorgesehen ist. Durch diese Form der Dämpfung werden der Bodenplatte ebenfalls Schwingungen entnommen, wodurch ein auf der Bodenplatte gehender Passagier ein angenehmeres Gefühl hat, da die Bodenplatte weniger nachgibt. Das Dämpfungselement kann aus einem Schaum hergestellt sein, aus einem Hartgummimaterial hergestellt sein, eine Wabenstruktur aufweisen, und/oder eine Verstärkung (größere Materialstärke) der Bodenplatte sein.

In einer weiteren Variante kann das Auflager mindestens einen Vorsprung (oder Dorn) aufweisen. Der Vorsprung kann sich beispielsweise parallel zur Z-Achse (also senkrecht zu einer durch die eingebaute Bodenplatte gebildeten Ebene) erstrecken. Das Anschlusselement weist dabei eine Öffnung auf, die dazu eingerichtet ist, den Vorsprung aufzunehmen. Beispielsweise kann das Anschlusselement ein Fortsatz des Längsträgers und/oder der Bodenplatte sein, in dem eine senkrecht verlaufende Öffnung, Aushöhlung oder Bohrung ausgebildet ist. Somit kann die Öffnung, Aushöhlung oder Bohrung auf den Vorsprung aufgesetzt werden und diesen aufnehmen.

Alternativ kann sich der Vorsprung auch in Y-Richtung (also parallel zur Längsrichtung eines eingebauten Bodenelements) erstrecken. In diesem Fall kann sich die Öffnung an einer Stirnseite des Längsträgers und/oder der Bodenplatte befinden. Zum leichteren Einbau eines solchen Bodenelements kann die Bodenbaugruppe auf einer Spantseite ein Auflager mit einem Vorsprung aufweisen, der sich in Y-Richtung erstreckt, während auf der in Y-Richtung betrachtet gegenüberliegenden Seite des Spants ein Auflager mit einem Vorsprung, der sich in Z-Richtung erstreckt, vorgesehen ist.

Ebenfalls alternativ weist das Auflager mindestens eine Öffnung auf, wobei das Anschlusselement dazu eingerichtet ist, in die Öffnung des Auflagers eingesetzt zu werden. Mit anderen Worten weist das Anschlusselement einen Vorsprung auf, wie er oben für das Auflager beschrieben ist, während das Auflager eine korrespondierende Öffnung aufweist.

Wiederum alternativ können das Auflager und das Anschlusselement Öffnungen aufweisen, die übereinander angeordnet werden können, sodass ein Bolzen oder Stift durch die Öffnungen des Auflagers und des Anschlusselements geführt werden kann. Dadurch lässt sich leicht und kostengünstig durch Verwendung üblicher Verbindungsmittel eine zerstörungsfrei lösbare Verbindung zwischen Auflager und Anschlusselement herstellen.

Optional kann in mindestens einer der Öffnungen ein elastisches Material angeordnet sein. Beispielsweise kann ein elastisches Polymer, wie ein Hartgummi, in der Öffnung vorgesehen sein. Dadurch lassen sich einerseits Schwingungen dämpfen, die andernfalls zwischen Bodenelement und Auflager übertragen würden. Andererseits können auch Toleranzen ausgeglichen werden. Dabei übernimmt das elastische Material eine tragende Funktion zumindest in die von der Ebene, in der die Öffnung liegt, bestimmten Richtungen.

In einer Variante ist der Vorsprung durch ein separates Bauteil mit Dorn ausgebildet, das dazu eingerichtet ist, an dem Auflager oder dem Anschlusselements befestigt zu werden. Dadurch kann zunächst das Auflager an dem Spant befestigt werden und erst anschließend der Vorsprung (Dorn) an der notwendigen Stelle positioniert werden. Dadurch können Toleranzen ausgeglichen werden. Hierfür kann das Bauteil optional an einer dem Auflager oder dem Anschlusselement zugewandten Seite ein Zahnprofil aufweisen, das mit einem Zahnprofil an dem Auflager bzw. dem Anschlusselement korrespondiert. Die Zahnprofile können sich dabei in eine bestimmte Richtung erstrecken, sodass jeder Zahn eine Ausdehnung in die bestimmte Richtung aufweist. Mit anderen Worten ist das Zahnprofil wie eine gefaltete Ebene. Die bestimmte Richtung kann beispielsweise die Querrichtung eines Luftfahrzeugs, und somit die Längsrichtung des Längsträgers und Bodenelements, sein. Dadurch kann das Bauteil mit Dorn in Längsrichtung des Luftfahrzeugs (Querrichtung des Bodenelements) ausgerichtet und in das Zahnprofil des Auflagers bzw. des Anschlusselements eingesetzt und anschließend mit dem Auflager bzw. Anschlusselement fest verbunden werden.

Der Abstand zwischen den Zähnen bestimmt dabei den Versatz, mit dem das Bauteil mit Dorn befestigt werden kann, um Toleranzen auszugleichen. Selbstverständlich können die korrespondierenden Zahnprofile auch aus einer Vielzahl von rasterförmig angeordneten Pyramiden bestehen, sodass das Bauteil mit Dorn in zwei Richtungen (beispielsweise Längsrichtung und Querrichtung des Luftfahrzeugs) ausgerichtet und anschließend an dem Auflager bzw. Anschlusselement fixiert werden kann. Ferner können Bohrungen oder Öffnungen in dem Auflager bzw. Anschlusselement zur Aufnahme eines Befestigungsmittels (beispielsweise Schraube oder Bolzen) erste vorgesehen werden, wenn das Bauteil mit dem Zahnprofil ausgerichtet ist. Alternativ können die Bohrungen oder Öffnungen größer als der Querschnitt des Befestigungsmittels sein, um ein Versetzen des Bauteils zu ermöglichen. Beispielsweise kann der Unterschied der Größen einem Vielfachen des Abstands zweier Zähne entsprechen.

In einer weiteren Ausgestaltungsvariante kann die Bodenbaugruppe eine Sitzschiene umfassen. Dabei kann die Sitzschiene in der Bodenplatte integriert sein oder in die Bodenplatte eingesetzt sein. Beispielsweise kann bei Herstellung eines Bodenelements aus einem Verbundwerkstoff die Sitzschiene durch den Verbundwerkstoff hergestellt werden. Alternativ kann eine vorgefertigte Sitzschiene in dem Verbundwerkstoff vor dessen Fertigstellung eingesetzt und durch Fertigstellung des Verbundwerkstoffs darin kraft- und/oder formschlüssig gehalten werden.

Der Längsträger und/oder die Bodenplatte kann/können eine Aussparung aufweisen, in der die Sitzschiene verläuft. Beispielsweise kann bei der Herstellung des Bodenelements die Aussparung vorgesehen werden, in der anschließend die Sitzschiene befestigt wird. Beispielsweise kann die Sitzschiene in der Aussparung festgeschraubt, genietet oder eingeklebt werden. Hierbei kann die Bodenplatte weiterhin durchgängig über die gesamte Längserstreckung des Bodenelements ausgebildet sein, sodass keine Fugen zwischen angrenzenden Bodenpaneelen entstehen.

Ferner kann die Bodenbaugruppe mindestens eine Kopplungseinrichtung umfassen, die an und/oder in einem der Längsträger angeordnet ist. Optional kann die Kopplungseinrichtung auch an und/oder in einem Querträger und/oder Traverse angeordnet sein. Die Kopplungseinrichtung weist eine Bolzenaufnahme auf, in die ein Kopplungsbolzen eingeführt werden kann. Die Kopplungseinrichtung kann dabei so an/in der Bodenbaugruppe angeordnet sein, dass sie einer entsprechenden Kopplungseinrichtung einer benachbarten Bodenbaugruppe, wenn beide Bodenbaugruppen in einem Luftfahrzeug installiert sind, gegenüberliegt. Dadurch kann der Kopplungsbolzen durch die Bolzenaufnahmen beider Kopplungseinrichtung eingeführt werden und die beiden Bodenbaugruppen miteinander mechanisch koppeln.

In einer alternativen Ausgestaltung kann die Kopplungseinrichtung entweder einen Kopplungsbolzen, der sich von dem Längsträger senkrecht zu dessen Längsachse und von der Bodenplatte weg erstreckt, oder eine Bolzenaufnahme, die sich senkrecht zu einer Längsachse des Längsträgers und in einen Bereich unterhalb der Bodenplatte hinein erstreckt, auf. Hierbei muss kein separater Kopplungsbolzen vorgesehen werden, da er bei einer der Kopplungseinrichtung bereits vorhanden ist. Die Kopplungseinrichtungen zweier Bodenbaugruppen müssen jedoch so gestaltet sein, dass beim Einbau der Bodenbaugruppen in ein Luftfahrzeug die korrespondierenden Kopplungseinrichtungen gegenüberliegen und der Kopplungsbolzen der einen Kopplungseinrichtung in die Bolzenaufnahme der anderen Kopplungseinrichtung eingreift.

Die Kopplungseinrichtung kann so angeordnet sein, dass der Kopplungsbolzen bei einer Aufsicht auf die Bodenplatte unter der Bodenplatte hervorschaut, während die Bolzenaufnahme unterhalb der Bodenplatte angeordnet ist. Damit können zwei Bodenelemente nebeneinander in ein Luftfahrzeug eingebaut werden, wobei je ein Kopplungsbolzen eines ersten Bodenelements in eine Bolzenaufnahme eines zweiten Bodenelements eingreift und somit die beiden Bodenelemente koppelt.

Aufgrund der Ausrichtung des Kopplungsbolzens und der Bolzenaufnahme können Vertikalkräfte (in Z-Richtung) zwischen den beiden Bodenelementen übertragen werden. Dadurch werden Schwingungen zwischen zwei Bodenelementen, beispielsweise aufgrund eines gehenden Passagiers oder Kabinenpersonals mit Trolley, vermindert oder vermieden. Optional können auch Horizontalkräfte in Y-Richtung (Querrichtung) des Luftfahrzeugs zwischen Kopplungsbolzen und Bolzenaufnahme übertragen werden. Ebenfalls optional ist der Kopplungsbolzen in der Bolzenaufnahme in X-Richtung (Längsrichtung) des Luftfahrzeugs frei beweglich. Dadurch lassen sich Spannungen zwischen den Bodenelementen vermeiden.

Alternativ oder zusätzlich kann die Kopplungseinrichtung an einem Ende einer Sitzschiene angebracht sein oder in einer Sitzschiene integriert sein. Da die Sitzschiene mit einer Sitzschiene eines benachbarten Bodenelements korrespondieren muss erstreckt sich die Sitzschiene meist über die gesamte Breite der Bodenplatte (des Bodenelements). Damit korrespondieren jeweilige Enden der Sitzschiene jeweiliger Bodenelemente und bieten den optimalen Platz für eine Kopplungseinrichtung, ohne zusätzliche strukturelle Elemente an dem Bodenelement vorsehen zu müssen.

Die Kopplungseinrichtung kann in Form einer Stirnwand an einer Sitzschiene oder einem Querträger vorgesehen sein. Dabei kann an der Stirnwand entweder ein Kopplungsbolzen oder eine Bolzenaufnahme angeordnet werden. In einer für die Herstellung einfachen Variante werden für jede Kopplungseinrichtung eine gleich ausgebildete Stirnwand mit einer Öffnung vorgesehen. Wenn zwei Kopplungseinrichtungen zweier benachbarter Bodenelemente im eingebauten Zustand der Bodenelemente sich gegenüber liegen, kann ein Kopplungsbolzen durch die beiden Öffnungen der beiden Kopplungseinrichtungen geschoben werden und in dieser Position gesichert werden. Beispielsweise kann der Kopplungsbolzen auf einer Seite einen Kopf aufweisen, der größer ist als der Querschnitt der Öffnungen, und auf der anderen Seite eine Sicherungsmöglichkeit (zum Beispiel Bohrung für Sicherungsstift oder Gewinde für Sicherungsmutter).

Alternativ oder zusätzlich kann die Kopplungseinrichtung mindestens ein Ausgleichselement umfassen, das in eine Bolzenaufnahme oder auf dem Kopplungsbolzen installiert wird. Beispielsweise kann ein Ausgleichsring in die Bolzenaufnahme eingesetzt oder auf den Kopplungsbolzen gesetzt werden. Das Ausgleichselement ist aus einem elastischen Material gefertigt, sodass der Kopplungsbolzen, wenn er in die Bolzenaufnahme eingreift, eine geringe Bewegungsfreiheit im Rahmen der elastischen Verformung des Ausgleichselements hat. Dadurch können Toleranzen ausgeglichen werden, die bei der Herstellung der Bodenbaugruppen und insbesondere bei der Herstellung der Kopplungseinrichtungen sowie nach dem Einbau der Bodenbaugruppen in ein Luftfahrzeug vorhanden sein können.

Ebenfalls alternativ oder zusätzlich kann die Kopplungseinrichtung dazu eingerichtet sein, ein Verbindungselement aufzunehmen, das dazu eingerichtet ist, mit einer Innenausbaukomponente verbunden zu werden. Insbesondere kann es sich bei der Innenausbaukomponente um ein vertikal angeordnetes Strukturelement im Luftfahrzeugrumpf handeln, über welches hohe Lasten des Bodenelements in die Rumpfstruktur des Luftfahrzeugs übertragen werden (beispielsweise Crashlasten). Durch die Lage der Kopplungseinrichtungen an zwei benachbarten Bodenelementen kann die Innenausbaukomponente in einfacher Weise mit der Tragstruktur des Bodenelements gekoppelt werden. Beispielsweise kann das Verbindungselement Gabel-förmig (oder U-förmig) sein, wobei jeweils ein Schenkel einem Bodenelement der beiden benachbarten Bodenelemente zugeordnet ist. Für den Fall eines separaten Kopplungsbolzens kann das Verbindungselement so gestaltet sein, dass je ein Schenkel eine Stirnseite eines jeweiligen Kopplungselements überlappt, wobei eine Öffnung in dem jeweiligen Schenkel mit einer Öffnung in den jeweiligen Stirnseite zusammenfällt. Anschließend kann der Kopplungsbolzen durch die Stirnseiten der Kopplungselemente sowie die Schenkel des Verbindungselements geführt werden und sowohl die Bodenelemente als auch das Verbindungselement zu fixieren. Am unteren Ende des Verbindungselements kann eine Kopplungseinrichtung zum Koppeln mit der Innenausbaukomponente vorgesehen sein.

Ferner kann das monolithische Bodenelement eine Leitung und/oder einen oder mehrere Anschlüsse für Versorgungsleitungen umfassen. So können in dem monolithischen Bodenelement Leitungen und/oder Anschlüsse zur Versorgung von auf der Bodenbaugruppe angeordneten Geräten integriert sein. Beispielsweise können Stromleitungen, Datenleitungen, Wasserleitungen, Abwasserleitungen, etc. und entsprechend Anschlüsse dafür vorgesehen sein, sodass auf dem Bodenelement vorgesehene Sitze, Monumente und andere Luftfahrzeugkomponenten angeschlossen werden können. Diese Leitungen erlauben eine Durchführung durch das Bodenelement in Z-Richtung (also senkrecht zur durch die Bodenplatte gebildeten Ebene). Die Anschlüsse können auf der im eingebauten Zustand des Bodenelements oben liegenden Seite der Bodenplatte angeordnet sein, so dass sich Sitze, Monumente und andere Luftfahrzeugkomponenten mit möglichst kurzen Leitungslängen anschließen lassen. Ferner können die Leitungen zu den Enden des Bodenelements hin verlaufen, also im eingebauten Zustand des Bodenelements in Querrichtung des Luftfahrzeugs verlaufen. Die meisten Luftfahrzeuge weisen in mindestens einem Dreiecksbereich unterhalb des Kabinenbodens an einer Seite des Luftfahrzeugs Kanäle auf, in denen Leitungen in Längsrichtung des Luftfahrzeugs (X-Richtung) verlaufen. So können die Leitungen in den Bodenelementen an diese längsverlaufenden Leitungen mit möglichst kurzer Leitungslänge angeschlossen werden.

Ferner können bestimmte Bodenelementtypen vorgesehen sein, die nur eine bestimmte Auswahl an Leitungen und Anschlüssen umfassen. Dadurch können Bodenelemente bereitgestellt werden, die für bestimmte Aufbauten (Sitze, Monumente und andere Luftfahrzeugkomponenten) vorkonfiguriert sind. Beispielsweise kann ein Bodenelementtyp für Sitzreihen mit Strom- und/oder Datenleitungen und entsprechenden Anschlüssen ausgerüstet sein, während ein Bodenelementtyp für Küchen mit Wasser-, Abwasser und/oder Stromleitungen und entsprechenden Anschlüssen ausgerüstet sein kann. Auch sind entsprechende weitere Bodenelementtypen, wie Bodenelemente, auf denen mindestens eine Toilette angeordnet wird, denkbar. Dadurch können Bodenelemente gezielt für die Nutzung der entsprechenden Bereiche in dem Luftfahrzeug eingesetzt werden, wodurch Gewicht eingespart werden kann, beispielsweise aufgrund der Vermeidung ansonsten überdimensionierter Flexzonen. Aufgrund der gleichen, in dem ganzen Flugzeug verwendeten Auflager können die Bodenelemente für bestimmte Nutzungen an jeder Stelle des Luftfahrzeugs angebracht werden. Dies vereinfacht den Einbau des Bodens in dem Luftfahrzeug und ermöglicht zudem eine größere Flexibilität bei späteren Umgestaltungen des Luftfahrzeugs.

Zusätzlich kann das monolithische Bodenelement Anschlüsse aufweisen, womit die in dem monolithischen Bodenelement verlaufende(n) Leitung(en) mit entsprechenden Leitungen benachbarter Bodenelemente verbunden werden können. Dadurch kann durch Verbinden der Leitungen benachbarter Bodenelemente eine durchgängige Leitung in X-Richtung (Längsrichtung des Luftfahrzeugs) mit dem Einbau der Bodenelemente hergestellt werden. Mit anderen Worten kann jedes Bodenelement eine T-förmig angeordnete Leitung aufweisen, wobei zwei Anschlussmöglichkeiten zu benachbarten Bodenelementen sowie eine Anschlussmöglichkeit (nach oben) zum Anschluss an Sitze oder Monumente vorliegt. Alternativ oder zusätzlich kann das monolithische Bodenelement auch Halterungen aufweisen, um Leitungen in X-Richtung des Luftfahrzeugs zu verlegen. Die Halterungen können beispielsweise innerhalb und/oder unterhalbe eines Längsträgers des Bodenelements vorgesehen sein. Dabei sind die Halterungen entweder fest an gleichen vorgegebenen Positionen aller Bodenelemente vorgesehen oder verschiebbar angeordnet, sodass sie in Y-Richtung des Luftfahrzeugs ausgerichtet werden können.

In einer Variante erstreckt sich die Bodenplatte in einer Ebene. Alternativ kann die Bodenplatte eine Krümmung aufweisen, beispielsweise von einer Mitte der Bodenplatte zu den Enden des Bodenelements, an denen die Anschlusselemente angeordnet sind. Eine entsprechende nach oben gerichtete Krümmung kann so angepasst sein, dass bei Beladung der Bodenbaugruppe (nach Installation von Sitzen, Monumenten und anderen Gegenständen) die Bodenplatte sich in einer Ebene befindet.

Gemäß einem weiteren Aspekt weist ein Luftfahrzeugbereich mindestens zwei in Längsrichtung des Luftfahrzeugs (Flugzeug) parallel zueinander angeordnete Spante und mindestens eine Bodenbaugruppe gemäß dem ersten Aspekt auf. Der Luftfahrzeugbereich kann dabei Spante gleicher Größe aufweisen, sodass der Querschnitt des gesamten Luftfahrzeugbereichs (in Längsrichtung des Luftfahrzeugs betrachtet) im Wesentlichen gleich ist. Alternativ kann sich die Größe der Spante auch verändern. Beispielsweise im Bug- oder Heckbereich des Luftfahrzeugs kann sich der Querschnitt des Luftfahrzeugs verkleinern. Entsprechend ist auch die Länge der Bodenelemente der Baugruppen in dem Luftfahrzeugbereich unterschiedlich. Speziell geformte Bodenelemente, bei denen ein Längsträger länger ist als ein weiterer, um einer Verjüngung des Luftfahrzeugquerschnitts zu entsprechen, sind hierfür ebenfalls vorgesehen.

In einer Variante entspricht eine Breite des Bodenelements der mindestens einen Bodenbaugruppe einem Abstand der beiden Spanten in Längsrichtung des Luftfahrzeugs. Mit anderen Worten wird pro Paar Spante ein Bodenelement benötigt, um einen durchgängigen Kabinenboden in dem Luftfahrzeug zu erstellen. Dabei kann eine Fuge zwischen zwei aneinandergrenzenden Bodenelementen in einer Ebene, die durch einen Spant definiert wird, liegen. Alternativ kann diese Fuge auch parallel zu der durch einen Spant definierten Ebene verlaufen. Beispielsweise wenn das selbsttragende Bodenelement einen Längsträger aufweist, der an Auflagern eines einzelnen Spants befestigt ist, oder wenn das selbsttragende Bodenelement an Stringern befestigt ist.

Diese Form der Bodenelemente ermöglicht es, auf Flexzonen zu verzichten. So können bereits im Vorfeld gemäß den Angaben des Betreibers des entsprechenden Luftfahrzeugs Bodenelemente für Sitzbereiche (beispielsweise Bodenelemente mit Sitzschienen) installiert werden und nur in den vorgegebenen Bereichen für Monumente (Toiletten, Bordküchen, etc.) entsprechende, für größere Lasten ausgelegte Bodenelemente installiert werden. Dadurch kann die Größe des Kabinenbodens, der für die Lasten von Monumenten ausreichend verstärkt ist, reduziert werden, wodurch Gewicht eingespart wird.

Zudem lassen sich die Bodenelemente der Bodenbaugruppen leicht austauschen, da sie aufgrund ihrer geringen Breite durch Öffnungen des Luftfahrzeugs (beispielsweise Ladeluken oder Passagiertüren) passen. Dies erlaubt ein Umbauen des Luftfahrzeugs an geänderte Bedürfnisse des Betreibers oder an die Bedürfnisse eines neuen Betreibers. Aufgrund der zerstörungsfrei lösbaren Befestigung der Anschlusselemente der Bodenelemente an wenigen Auflagern kann ein solcher Umbau des Kabinenbodens des Luftfahrzeugs schnell und kostengünstig durchgeführt werden.

In einer Ausgestaltungsvariante kann es sich bei dem Luftfahrzeugbereich um einen Bereich des Kabinenbodens für Passagiere handeln. In diesem Fall befindet sich die mindestens eine Bodenbaugruppe in etwa in der vertikalen Mitte des Rumpfes des Luftfahrzeugs. In einer anderen Ausgestaltung kann es sich um einen Luftfahrzeugbereich eines Zwischenbodens handeln. Der von der mindestens einen Bodenbaugruppe gebildete Zwischenboden kann ebenfalls für Passagiere vorgesehen sein, beispielsweise bei einem doppelstöckigen Kabinenaufbau. In einer weiteren Ausgestaltung kann es sich bei dem Luftfahrzeugbereich um den Bodenbereich eines Rumpfes eines Luftfahrzeugs handeln. Dabei können die Bodenelemente der mindestens einen Bodenbaugruppe einen Frachtraumboden bilden und entsprechend stark für die in dem Frachtraum vorkommenden Lasten ausgebildet sein. Selbstverständlich können die Bodenelemente in dem Bodenbereich des Rumpfes auch für Passagiere, und somit geringere Lasten, ausgelegt sein. So ist es möglich, schwere Bodenelemente, die für einen Frachtraum notwendig sind, durch leichte Bodenelemente für Passagiere auszutauschen. Beispielsweise können an einem Spant zwei oder drei Auflager auf jeder Seite des Luftfahrzeugs angebracht sein, sodass zwei oder drei übereinander angeordnete Bodenbaugruppen gebildet werden können und das Luftfahrzeug mit zwei oder drei übereinander angeordneten Böden flexibel je nach Bedarf ausgestattet werden kann.

Gemäß noch einem weiteren Aspekt umfasst ein Luftfahrzeug einen Luftfahrzeugbereich, gemäß dem zuletzt beschriebenen Aspekt.

Gemäß einem anderen Aspekt wird die Verwendung einer Bodenbaugruppe gemäß dem zuerst beschriebenen Aspekt zur Installation eines Kabinenbodens in einem Luftfahrzeug beschrieben. So eignet sich die Bodenbaugruppe gemäß dem ersten Aspekt zur Installation eines Kabinenbodens, nachdem an einem Rumpf des Luftfahrzeugs vorzusehende Innenausbaukomponenten angebracht worden sind. Beispielsweise können alle direkt am Rumpf befestigten Komponenten des Luftfahrzeugs (wie Leitungen, Klimaanlagen, Avionik, strukturelle Verstärkungen, Boden und Wände des Frachtbereichs, etc.) zunächst in das Luftfahrzeug eingebaut werden. Erst im Anschluss daran können Bodenbaugruppen zur Installation des Kabinenbodens eingesetzt werden.

Da der Boden des Frachtbereichs dazu eingerichtet ist, deutlich größere Lasten aufzunehmen als der Boden einer Passagierkabine, lässt sich der Innenausbau des Luftfahrzeugs auch mit Robotern durchführen, die auf dem Boden des Frachtbereichs gelagert sind oder auf diesem fahren. Die Roboter sind dabei in der Lage, auch im oberen Kabinenbereich und Deckenbereich des Luftfahrzeugs Einbauten vorzunehmen, da der aus den hier beschriebenen Bodenbaugruppen bestehende Kabinenboden noch nicht installiert sein muss. Dadurch kann der Innenausbau des Luftfahrzeugs automatisiert und deutlich beschleunigt werden.

Aufgrund ihrer geringen Breite können die monolithischen selbsttragenden Bodenelemente durch normale Öffnungen des Luftfahrzeugs in das Innere des Luftfahrzeugs gebracht werden. Dies ermöglicht die Installation eines Kabinenbodens auch nachdem der Bug- und Heckbereich des Luftfahrzeugs bereits an dem Rumpf angebracht sind. Beispielsweise können die Bodenelemente der hier beschriebenen Bodenbaugruppe durch eine Ladeluke oder eine Passagiertür des Luftfahrzeugs hindurchgeführt werden.

Ferner ist es ebenso möglich, ein Luftfahrzeug bei geringer Standzeit umzubauen. So können Bodenelemente für einen Sitzbereich des Luftfahrzeugs durch Bodenelemente für einen Monumentbereich (beispielsweise eine Küchenbereich und/oder Toilettenbereich) ausgetauscht werden, oder umgekehrt. Auch kann ein Frachtbereich zumindest teilweise in einen weiteren Passagierbereich umfunktioniert werden. Nachfolgend werden Ausführungsbeispiele der Erfindung anhand der Zeichnungen näher beschrieben.
- Figur 1: zeigt schematisch eine perspektivische Ansicht eines Bereichs eines Luftfahrzeugs mit mehreren Bodenbaugruppen,
- Figur 2: zeigt schematisch eine perspektivische Ansicht eines Bodenelements einer Bodenbaugruppe,
- Figur 3: zeigt schematisch eine Aufsicht eines Bodenelements,
- Figur 4: zeigt schematisch eine Seitenansicht eines Bodenelements,
- Figur 5: zeigt schematisch einen Ausschnitt einer Seitenansicht eines Bodenelements mit Sitzschiene,
- Figur 6: zeigt schematisch eine perspektivische Ansicht eines Ausschnitts eines Luftfahrzeugbereichs,
- Figur 7: zeigt schematisch eine perspektivische Ansicht eines Ausschnitts eines Bodenelements mit einem Anschlusselement,
- Figur 8: zeigt schematisch eine perspektivische Ansicht eines Ausschnitts eines Luftfahrzeugbereichs mit einem Auflager und einem Anschlusselement einer Bodenbaugruppe,
- Figur 9: zeigt schematisch eine perspektivische Ansicht eines Ausschnitts eines Luftfahrzeugbereichs mit zwei Spanten und mehreren Bodenelementen,
- Figur 10: zeigt schematisch eine Seitenansicht eines Bodenelements gemäß einer Variante,
- Figur 11: zeigt schematisch eine Aufsicht eines Bodenelements gemäß der Variante aus Figur 10,
- Figur 12: zeigt schematisch eine detaillierte Seitenansicht eines Auflagers und eines Anschlusselements,
- Figur 13: zeigt schematisch eine perspektivische Ansicht des Auflagers aus Figur 12 mit zwei Anschlusselementen,
- Figur 14: zeigt schematisch ein Detail zwischen Auflager und Bauteil mit Dorn aus Figur 13,
- Figur 15: zeigt schematisch eine perspektivische Ansicht einer Kopplungseinrichtung,
- Figur 16: zeigt schematisch eine perspektivische Ansicht eines Verbindungselements an einer Kopplungseinrichtung, und
- Figur 17: zeigt schematisch eine perspektivische Ansicht eines Luftfahrzeugs mit einem exponierten Ausschnitt eines Luftfahrzeugbereichs mit Bodenbaugruppen.

Gemäß der vorliegenden Erfindung wird eine Bodenbaugruppe für ein Luftfahrzeug bereitgestellt sowie ein Luftfahrzeugbereich (Flugzeugbereich) mit Spanten und Bodenbaugruppe, ein entsprechendes Luftfahrzeug sowie eine Verwendung einer Bodenbaugruppe beschrieben.

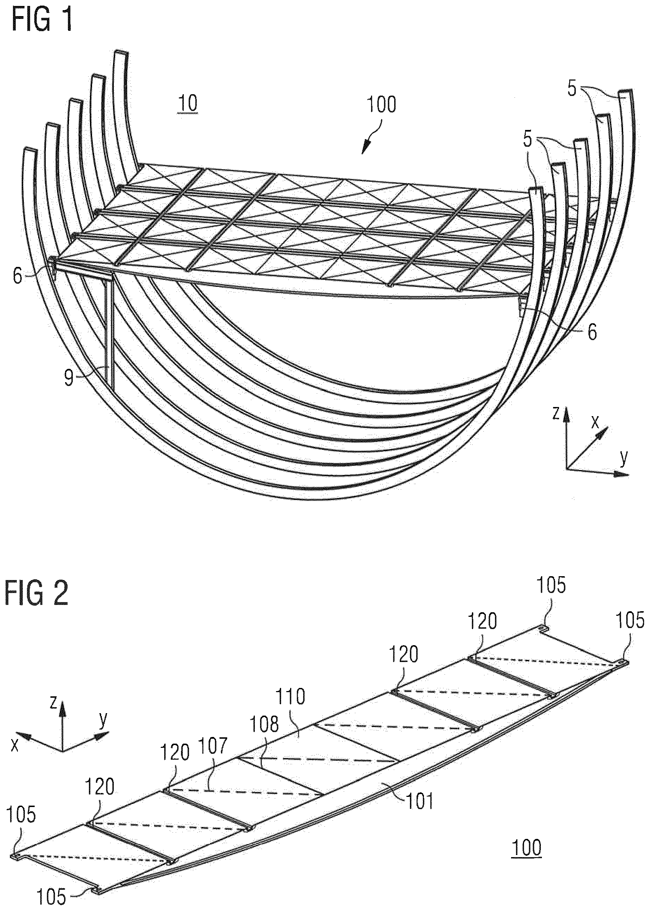

In Figur 1 ist schematisch eine perspektivische Ansicht eines Bereichs 10 eines Luftfahrzeugs 1 mit mehreren Bodenbaugruppen gezeigt. Eine Bodenbaugruppe umfasst mindestens zwei Auflager 6, die an gegenüberliegenden Seiten eines Spants 5 des Luftfahrzeugs 1 befestigt sind. Ein Spant 5 bildet einen Querschnitt des Luftfahrzeugs 1 und liegt im Wesentlichen in einer Querschnittsebene des Luftfahrzeugs 1 (einer durch die Z-Achse und Y-Achse gebildeten Ebene, wobei die Y-Achse quer zur Längsrichtung (X-Achse) des Luftfahrzeugs 1 liegt und die Z-Achse senkrecht zur X-Achse und Y-Achse verläuft). Jedes der Auflager 6 kann an dem Spant 5 nachträglich angebracht sein oder alternativ einstückig mit dem Spant hergestellt sein, also in den Spant integriert sein.

Die Bodenbaugruppe umfasst ferner ein monolithisches selbsttragendes Bodenelement 100. Das Bodenelement 100 ist an dem Spant 5 durch Anbringung an entsprechenden Auflagern 6 befestigt. Der in Figur 1 dargestellte Luftfahrzeugbereich 10 umfasst vier Bodenelemente 100. Jedes der Bodenelemente 100 ist an mindestens einem Spant befestigt.

In der dargestellten Ausgestaltung ist jedes Bodenelement 100 auf jeder Seite an je zwei Spanten 5 mit je einem Auflager 6 befestigt. Der Luftfahrzeugbereich 10 umfasst ferner Innenausbaukomponenten 9. Beispielsweise kann eine Innenausbaukomponente 9 in Form einer Rahmenverstärkung vorgesehen sein. Diese Rahmenverstärkung 9 dient einerseits zur Aufnahme von Lasten im Crashfall und andererseits der Bildung einer Seitenwand eines Frachtbereichs im unteren Rumpf des Luftfahrzeugs 1.

Figur 2 zeigt schematisch eine perspektivische Ansicht eines Bodenelements 100 einer Bodenbaugruppe. Das Bodenelement 100 besteht aus mindestens einem Längsträger 101, einer auf dem Längsträger 101 angeordneten Bodenplatte 110 und jeweils einem an jedem Ende des Längsträgers 101 angeordneten Anschlusselement 105.

Jedes der Anschlusselemente 105 dient der Befestigung des Bodenelements 100 an einem entsprechenden Auflager 6 und somit einem entsprechenden Spant 5.

Gemäß der dargestellten Ausgestaltung weist das Bodenelement 100 zwei Längsträger 101 auf, die jeweils an einer Längsseite des Bodenelements 100 angeordnet sind. Alternativ kann auch ein einzelner Längsträger 101 in der Mitte des Bodenelements 100 angeordnet sein, sodass das Bodenelement 100 eine T-förmige Querschnittsform hat. Das Bodenelement 100 ist monolithisch und somit selbsttragend ausgebildet. Sämtliche Lasten werden über die Bodenplatte 110 und den mindestens einen Längsträger 101 in die Anschlusselemente 105 geleitet.

Das monolithische Bodenelement 100 kann ferner mindestens einen Querträger 108 umfassen, der im Wesentlichen senkrecht zu dem mindestens einen Längsträger 101 angeordnet ist. Im Wesentlichen senkrecht bedeutet hier eine Anordnung in einem rechten Winkel +/- 2°. Optional kann das Bodenelement 100 auch mindestens eine Traverse 107 umfassen, die sich schräg zu dem Längsträger 101 und gegebenenfalls auch schräg zu dem Querträger 108 erstreckt. Die Traverse 107 und der Querträger 108 sind vollständig unterhalb der Bodenplatte 110 angeordnet, sodass auf der Oberseite des Bodenelements 100 eine durchgängige Bodenplatte 110 erzielt werden kann.

Für den Fall, dass das Bodenelement 100 in einem Bereich 10 des Luftfahrzeugs 1 angeordnet wird, in dem Sitzreihen für Passagiere (nicht gezeigt) vorgesehen sein sollen, kann das Bodenelement 100 mit mindestens einer Sitzschiene 120 ausgestattet sein.

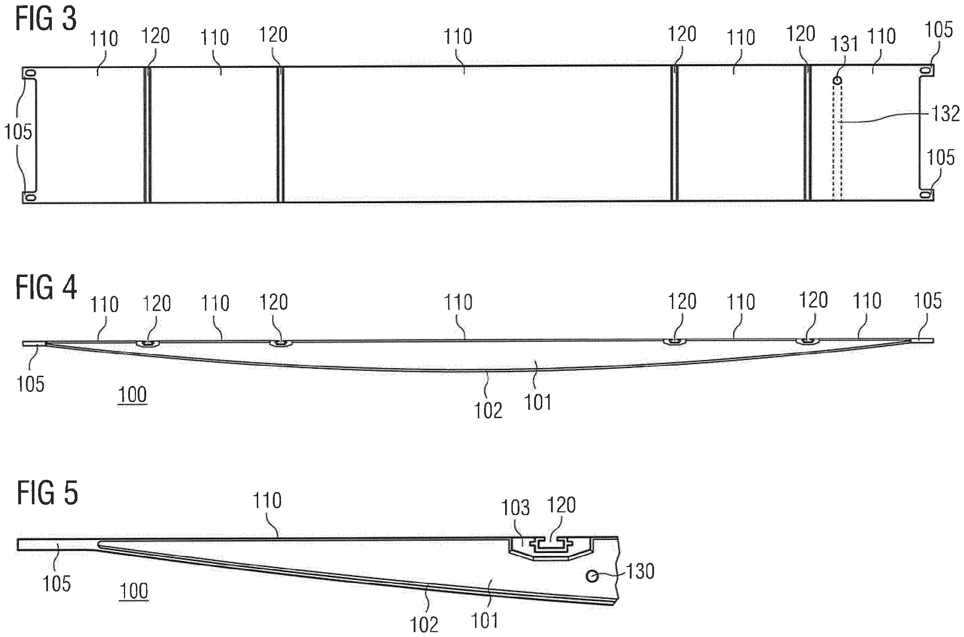

Figur 3 zeigt den Aufbau eines Bodenelements 100 detaillierter in Form einer schematischen Aufsicht eines Bodenelements 100, während Figur 4 die entsprechende Seitenansicht des Bodenelements 100 zeigt. Die Bodenplatte 110 des Bodenelements bildet eine obere durchgängige Fläche des Bodenelements. Die Bodenplatte 110 kann den Fußboden einer Kabine des Luftfahrzeugs 100 bilden. Alternativ kann auch ein Bodenbelag (nicht gezeigt), beispielsweise ein Teppich, auf der Bodenplatte 100 aufgebracht werden. In der Bodenplatte 110 kann die mindestens eine Sitzschiene 120 integriert sein. Mit anderen Worten kann die Sitzschiene 120 durch die Bodenplatte 110 selbst gebildet werden oder kann als separates Element in die Bodenplatte eingebaut werden. In jedem Fall ist es möglich, dass die Bodenplatte 110 sich über die gesamte Länge und Breite des Bodenelements 100 erstreckt und unterhalb der Sitzschiene 120 hindurchführt.

Für den Fall, dass das Bodenelement 100 in einem Bereich 10 des Luftfahrzeugs 1 angeordnet wird, in dem ein oder mehrere Monumente (wie zum Beispiel eine Bordküche, eine Toilette, eine Zwischenwand, ein Schrank, etc.; nicht gezeigt) vorgesehen sein sollen, kann das Bodenelement 100 mit einer vollständig in einer Ebene angeordneten Bodenplatte 110 ausgestattet sein. Mit anderen Worten ist die Oberfläche der Bodenplatte 110 nicht durch Sitzschienen oder andere Elemente unterbrochen. Ein Bodenelement 100, welches unterhalb von Monumenten angeordnet sein soll, kann eine stärkere Bodenplatte 110 sowie einen stärker ausgebildeten Längsträger 101 umfassen, um die gegenüber Passagiersitzen höheren Lasten der Monumente aufzunehmen. Auch die Anschlusselemente 105 können verstärkt ausgestaltet sein, um die höheren Lasten in die Auflager 6 sicher zu übertragen.

Der Längsträger 101 des Bodenelements 100 ist unterhalb der Bodenplatte 110 angeordnet und kann jede beliebige Form einnehmen. Das in Figur 4 dargestellte Bodenelement 100 weist einen Längsträger 101 mit einem parabolischen oder nahezu kreisbogenförmigen Verlauf seiner Unterkante auf. An der Unterkante des Längsträgers 101 kann ein Flansch 102 angebracht sein, um die Stabilität des Längsträgers 101 zu erhöhen.

Ferner kann das monolithische Bodenelement 100 eine Leitung 132 umfassen. Die Leitung 132 kann als Strom-, Daten-, Wasser- und/oder Abwasserleitung ausgebildet sein. Entsprechend befinden sich auf einer Oberseite des Bodenelements 100, also in der Bodenplatte 110, ein oder mehrere Anschlüsse 131 der Leitung 132. Alternativ kann die Leitung 132 auch ein Leerrohr sein, das in der Bodenplatte 110 eine entsprechende Öffnung 131 aufweist. Die Anordnung des einen oder der mehreren Anschlüsse 131 kann standardisiert für bestimmte Monumenttypen (Toiletten, Bordküchen, etc.) sein, kann aber auch je nach Wunsch des Betreibers des Luftfahrzeugs 1 vorgenommen werden.

Figur 5 zeigt schematisch einen Ausschnitt der Seitenansicht eines Bodenelements 100 mit Sitzschiene 120. Die Sitzschiene 120 ist in einer Aussparung 103 der Bodenplatte 110 aufgenommen. In der dargestellten Ausgestaltung weist auch der Längsträger 101 eine entsprechende Aussparung 103 auf. Beispielsweise kann die Aussparung 103 mit einem Füll-und/oder Klebematerial ausgefüllt werden, in das die Sitzschiene 120 eingesetzt und damit befestigt wird. Alternativ kann die Aussparung 103 auch aus dem gleichen Material wie das monolithische Bodenelement 100 bestehen, wobei die Sitzschiene 120 bei der Herstellung des Bodenelements 100 kraft- und formschlüssig aufgenommen wird. Ebenfalls alternativ kann die Sitzschiene 120 direkt aus dem Material des monolithischen Bodenelements 100 hergestellt werden, sodass keine zusätzlichen Komponenten in dem Bodenelement 100 eingebaut werden müssen. In Figur 5 ist gut zu erkennen, dass die Bodenplatte 110 unterhalb der Sitzschiene 120 (die Aussparung 103 bildend) durchgängig verläuft, sodass keine Fugen unterhalb der Sitzschiene entstehen, wie dies bei früheren Bodenpaneelen der Fall war. Da kein Fugenmaterial eingebracht und ausgehärtet werden muss, kann die Herstellzeit des Bodenelements 100 verkürzt werden.

In der dargestellten Ausgestaltung laufen die Bodenplatte 110 und der Flansch 102 des Längsträgers 101 an einem längsseitigen Ende des Bodenelements 100 zusammen und bilden das Anschlusselement 105 oder gehen in das Anschlusselement 105 über. Alternativ kann der Längsträger 101 und/oder der Flansch 102 auch vor dem Anschlusselement 105 enden, wobei das Anschlusselement 105 ausschließlich aus der Bodenplatte 110 geformt wird.

Schließlich umfasst das Bodenelement 100 noch einen oder mehrere Anschlüsse 130, die beispielsweise an dem Längsträger 101 ausgebildet sind. Dieser Anschluss 130 ist mit der Leitung 132 (Figur 3) verbunden oder bildet einen weiteren Ausgang eines Leerrohres 132. Der Anschluss 130 dient der Verbindung der Leitung 132 mit einer entsprechenden Leitung 132 eines benachbarten Bodenelements 100. Dadurch können Versorgungsleitungen durch die Bodenelemente 100 in einem gesamten Luftfahrzeugbereich 10 in Längsrichtung des Luftfahrzeugs (X-Achse) gebildet werden.

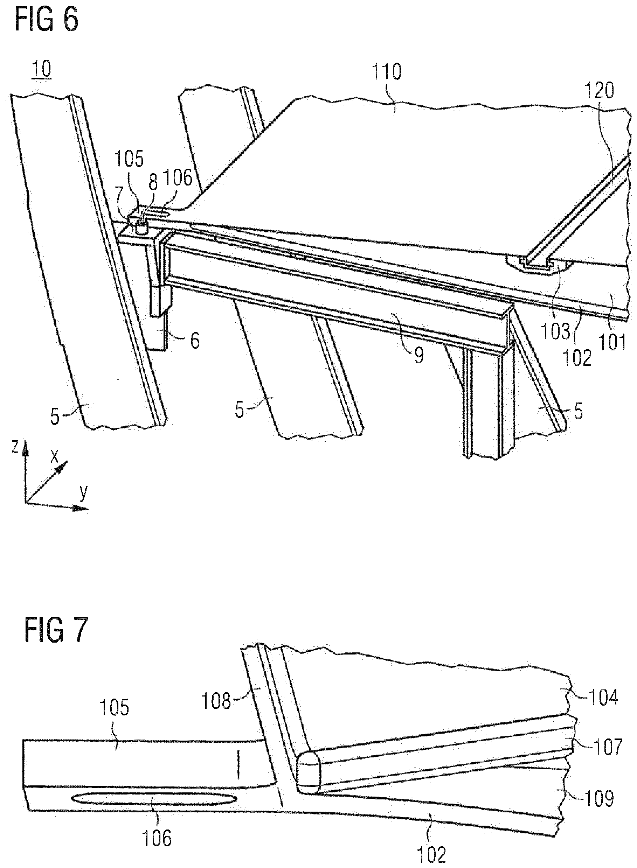

Figur 6 zeigt schematisch eine perspektivische Ansicht eines Ausschnitts eines Luftfahrzeugbereichs 10, der drei Spante 5 zeigt. An mindestens einem dieser Spante 5 ist ein Auflager 6 angeordnet oder in dem Spant 5 integriert. Das Auflager 6 bildet eine horizontale Auflagefläche 7, die im Wesentlichen parallel zu der Bodenplatte 110 des Bodenelements 100 verläuft (also in X- und Y-Richtung verläuft). Die Auflagefläche 7 muss nur so dimensioniert sein, dass die von einem Anschlusselement 105 eines Bodenelements 100 übertragenen Lasten aufgenommen und in das Auflager 6 und weiter in den Spant 5 übertragen werden können.

Das Auflager 6 kann mindestens einen Vorsprung 8 aufweisen, der beispielsweise senkrecht von der Auflagefläche 7 in Z-Richtung vorsteht. Das Anschlusselement 105 kann hierbei eine entsprechende Öffnung 106 aufweisen, die dazu eingerichtet ist, den Vorsprung 8 aufzunehmen. Der Vorsprung 8 sichert somit das Bodenelement 100 gegen ein Abgleiten des Bodenelements 100 von dem Auflager 6 durch eine Bewegung des Bodenelements 100 in der X-Y-Ebene. Ferner kann der Vorsprung 8 auch so ausgebildet sein, dass eine Sicherung des Anschlusselements 105 erfolgen kann. Beispielsweise kann der Vorsprung 8 so dimensioniert sein, dass er in Z-Richtung über eine Oberkante des Anschlusselements 105 hinausschaut. In diesem überstehenden Abschnitt des Vorsprungs 8 kann ein Sicherungselement (nicht gezeigt) angebracht werden, beispielsweise ein Sicherungsstift oder -bolzen oder eine auf den Vorsprung 8 aufschraubbare Sicherungsmutter. Dieses Sicherungselement dient der Befestigung des Bodenelements 100 in Z-Richtung.

Alternativ kann auch das Anschlusselement 105 einen entsprechenden nach unten gerichteten Vorsprung (nicht gezeigt) aufweisen, wobei das Auflager 6 eine der Öffnung 106 entsprechende Öffnung aufweist, in die der Vorsprung des Anschlusselements 105 eingreifen kann. Auch bei dieser Lösung kann ein Sicherungselement vorgesehen sein, welches beispielsweise auf einer Unterseite der Auflage 107 mit dem Vorsprung des Anschlusselements 105 eine Sicherung in Z-Richtung bewirkt.

Figur 6 zeigt ferner ein weiteres Strukturelement 9 oder Innenausbaukomponente 9 des Luftfahrzeugs 1. Diese dient in erster Linie einer Aussteifung des Spants 5, insbesondere für den Crashlastfall. Ferner kann ein vertikaler Abschnitt des Strukturelements 9 zur Herstellung einer Seitenwand eines unterhalb des Bodenelements 100 angeordneten Frachtraums dienen. Der im Wesentlichen horizontal verlaufende Abschnitt des Strukturelements 9 kann so angepasst sein, dass der Längsträger 101 des Bodenelements 100 berührungsfrei darüber verlaufen kann. Mit anderen Worten hat das Strukturelement 9 eine Oberkante mit einer Neigung, die dem Verlauf der Unterkante bzw. des Flanschs 102 des Längsträgers 101 entspricht, wobei ein Luftspalt zwischen dem Strukturelement 9 und der Unterkante bzw. dem Flansch 102 des Längsträgers 101 vorgesehen ist. Im Crashlastfall kann das Strukturelement 9 eine Verformung des Bodenelements 100 in Z-Richtung nach unten begrenzen. Dadurch kann sich das Bodenelement 102 durchbiegen, wird jedoch durch das Strukturelement 9 im Crashlastfall weiter unterstützt. Dadurch kann die Höhe des Längsträgers 101 (in Z-Richtung) verringert werden, da die Tragfähigkeit des Längsträgers 101 vornehmlich für den normalen Belastungsfall mit Auflagepunkten ausschließlich an den Auflagern 6 ausgelegt sein muss.

Figur 7 zeigt schematisch eine perspektivische Ansicht eines Ausschnitts eines Bodenelements 100 mit einem Anschlusselement 105 und zeigt insbesondere eine Unteransicht eines Bodenelements 100. Dabei kann die Öffnung 106 des Anschlusselements 105 zumindest auf einer Unterseite des Anschlusselements 105 vorgesehen sein. Alternativ kann die Öffnung 106 auch durch die gesamte Erstreckung des Anschlusselements 105 in Z-Richtung reichen. Unterhalb der Bodenplatte 110 kann mindestens ein Querträger 108 angeordnet sein, der im Wesentlichen senkrecht zu dem mindestens einen Längsträger 101 angeordnet ist. Optional kann auch mindestens eine Traverse 107 vorgesehen sein, die sich schräg zwischen dem Längsträger 101 und einem Querträger 108 erstreckt. Dabei können der Längsträger 101, der Querträger 108 und die Traverse 107 integral (einstückig) mit einer Unterseite 104 der Bodenplatte 110 hergestellt sein oder alternativ in einzelnen Elementen hergestellt werden und mit der Bodenplatte durchgängig verbunden (geklebt, geschweißt) werden.

An der Unterseite 104 der Bodenplatte 110 kann eine Trittschalldämmung oder andere Dämpfung vorgesehen sein. Alternativ oder zusätzlich kann an der Unterseite 104 auch eine Verstärkung der Bodenplatte, beispielsweise in Form einer Bienenwabenstruktur oder eines aussteifenden Schaums, angeordnet sein. Letztere kann beispielsweise bei einem Bodenelement 100 für Monumente vorgesehen werden, um die höheren Lasten aufnehmen zu können.

Optional kann an der Unterseite oder der Oberseite des Anschlusselements 105 eine Verstärkung (nicht dargestellt) angeordnet sein. Dadurch kann der Längsträger 101 durchgängig mit einer bestimmten Materialstärke hergestellt werden, wobei im Bereich des Anschlusselements 105 zum Anschluss an das Auflager 6 eine Verstärkung vorgesehen ist.

Auf der Innenseite oder auf beiden Seiten eines Längsträgers 101 kann ebenfalls eine Verstärkung 109 des Längsträgers 101 vorgesehen sein. Diese Verstärkung 109 kann ebenfalls in Form einer Bienenwabenstruktur oder eines aussteifenden Schaums hergestellt werden. Alternativ kann der Längsträger 101 auch zwei parallel verlaufende Stege aufweisen, die zusammen mit dem Flansch 102 und der Bodenplatte 110 einen rechteckigen Querschnitt des Längsträgers 101 formen. Der Hohlraum dieses Längsträgers 101 kann ebenfalls durch eine Verstärkung 109 ausgefüllt sein.

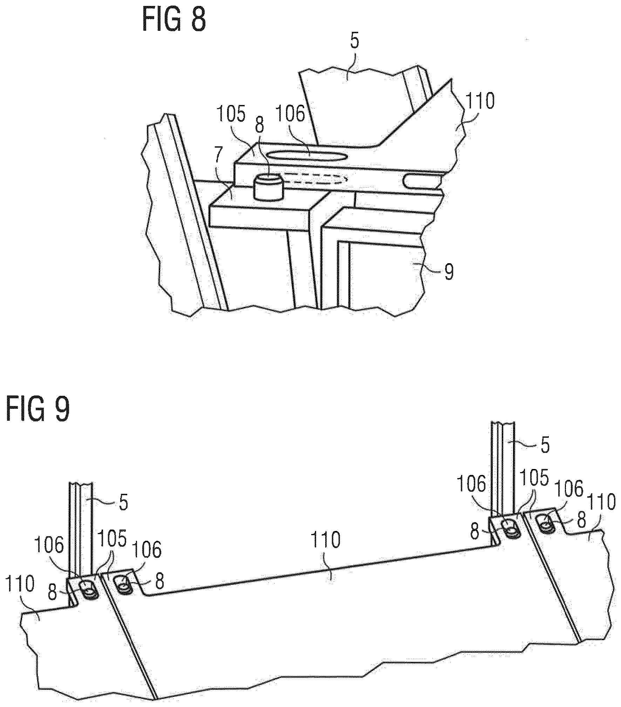

Figur 8 zeigt schematisch eine perspektivische Ansicht eines Ausschnitts eines Luftfahrzeugbereichs 10 mit einem Auflager 6 und einem Anschlusselement 105 einer Bodenbaugruppe. Dabei kann das Auflager 6 eine Auflagefläche 7 aufweisen, die so dimensioniert ist, dass zwei Anschlusselemente 105 zweier benachbarter Bodenbaugruppen darauf angeordnet werden können. Ebenso kann ein solches Auflager 6 zwei

Vorsprünge 8 oder andere Sicherungsmechanismen für die Anschlusselemente 105 der benachbarten Bodenbaugruppen aufweisen, wobei in Figur 8 nur ein Vorsprung 8 in dem Bereich des Auflager 6 sichtbar ist, in dem (noch) kein Anschlusselement 105 liegt.

Figur 9 zeigt entsprechend schematisch eine perspektivische Ansicht eines Ausschnitts eines Luftfahrzeugbereichs 10 mit zwei Spanten 5 und mehreren Bodenelementen 100. Die Anschlusselemente 105 zweier benachbarter Bodenelemente 100 teilen sich ein Auflager 6. In Figur 9 ist erkennbar, dass jedes Auflager 6 zwei Vorsprünge 8 aufweist, die jeweils durch eine Öffnung 106 eines Anschlusselements 105 der benachbarten Bodenelemente 100 ragt. Auf der dargestellten Oberseite können Sicherungsmechanismen (nicht gezeigt) angebracht werden, um das Anschlusselement 105 gegen eine Bewegung in Z-Richtung nach oben zu sichern.

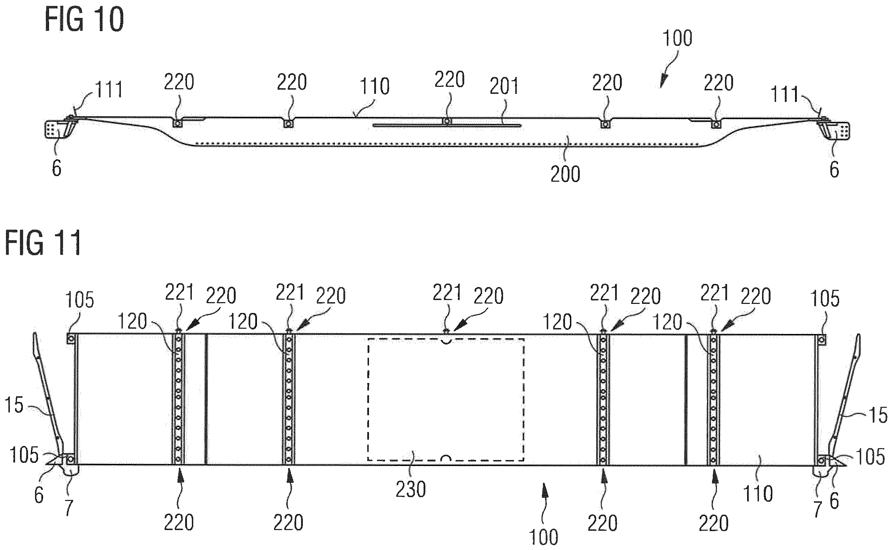

Figur 10 zeigt schematisch eine Seitenansicht eines Bodenelements 100 gemäß einer Variante, wobei der Aufbau des Bodenelements 100 größtenteils dem der Variante aus den Figuren 3 bis 5 entspricht. Daher werden nur die Unterschiede zwischen den beiden Varianten hier erläutert. Figur 11 zeigt schematisch eine Aufsicht des Bodenelements gemäß der Variante aus Figur 10.

Der Längsträger 200 des Bodenelements 100 ist unterhalb der Bodenplatte 110 angeordnet und kann jede beliebige Form einnehmen. In der dargestellten Variante weist der Längsträger 200 im mittleren Bereich eine konstante Höhe auf, sodass ein unter dem Bodenelement 100 liegender Raum eine konstante Deckenhöhe haben kann.

Ferner weist der Längsträger 200 einen Schlitz 201 auf, der in Längsrichtung des Längsträgers 200 verläuft. Der Schlitz 201 ist in einem Bereich vorgesehen, in dem keine Sitzschienen 120 angeordnet sind, sondern, wie hier in dem mittleren Bereich des Bodenelements 100, ein Passagiergang vorgesehen ist. Der Schlitz 201, der in Z-Richtung (vertikal) eine Ausdehnung von ca. 3 bis 10 mm (bspw. 5 mm) hat, ermöglicht eine Dämpfung von Schwingungen aus der Bodenplatte 110 durch in dem Gang gehende Passagiere oder Crewmitglieder, insbesondere wenn diese Trolleys oder andere Gegenstände durch den Gang auf der Bodenplatte 110 bewegen.

Zur zusätzlichen Dämpfung in diesem Bereich des Bodenelements 100 kann ein Dämpfungselement 230 (in Figur 11 gestrichelt dargestellt) unterhalb der Bodenplatte 110 angeordnet sein. Das Dämpfungselement 230 kann eine Breite (in Längsrichtung des Bodenelements 100) entsprechend der Länge des Schlitzes 201 aufweisen, kann aber optional auch kürzer oder länger als der Schlitz 201 sein. Die Höhe des Dämpfungselements 230 kann einem Abstand des Schlitzes 201 von der Bodenplatte 110 entsprechen. Wenn das Dämpfungselement 230 von dem Längsträger 200 beabstandet ist, kann das Dämpfungselement 230 auch eine größere Höhe als dieser Abstand einnehmen (andernfalls würde das Dämpfungselement 230 die Funktion des Schlitzes 201 beeinträchtigen).

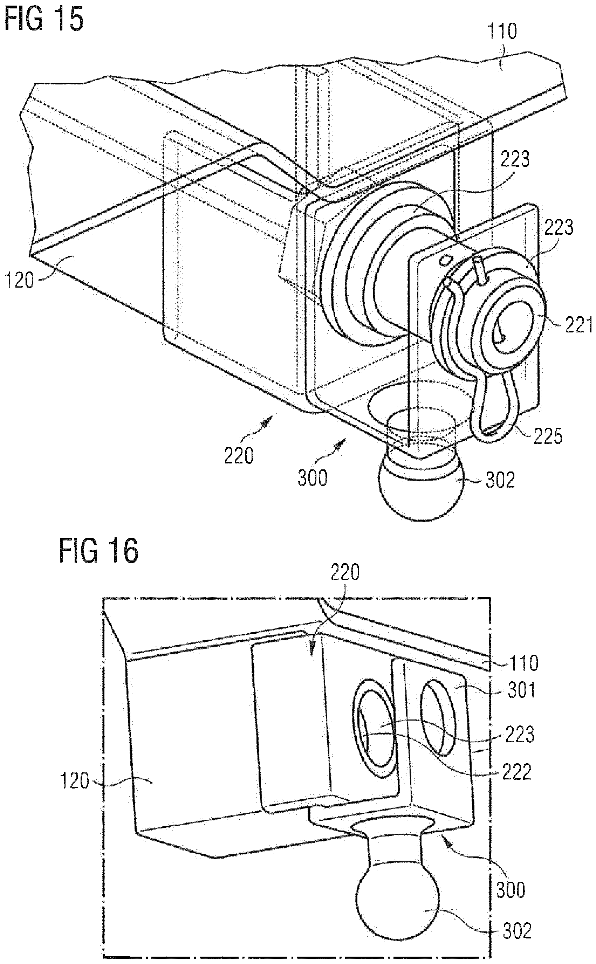

An dem Bodenelement 100 sind mehrere Kopplungseinrichtungen 220 vorgesehen. Diese Kopplungseinrichtungen 220 können an und/oder in einem der Längsträger 101, 200 angeordnet sein, können aber auch neben dem Längsträger 101, 200 an und/oder in einer Sitzschiene 120 und/oder an und/oder in einem Querträger 108 angeordnet sein. Wie insbesondere in Figur 11 dargestellt ist, umfasst jede Kopplungseinrichtung 220 auf einer Seite des Bodenelements 100 jeweils einen Kopplungsbolzen 221 (Figur 15), der unter der Bodenplatte 110 hervorschaut, also über die Breite der Bodenplatte 110 in X-Richtung (Querrichtung des Bodenelements 100) hinausgeht. Auf der gegenüberliegenden Seite des Bodenelements 100 sind Kopplungseinrichtung 220 mit je einer Bolzenaufnahme 222 (Figur 16) vorgesehen. Dadurch kann beim Einbau eines Bodenelements 100 dieses über die Kopplungseinrichtungen 220 mit den Kopplungseinrichtungen 220 eines benachbarten Bodenelements 100 so verbunden werden, dass zumindest Schwingungen in Z-Richtung gedämpft werden, da sie von einem Bodenelement 100 in das benachbarte Bodenelement 100 übertragen werden. Selbstverständlich kann der Kopplungsbolzen 221 als separates Element ausgebildet sein, um nach dem Einbau zweier Bodenelemente 100 in den Luftfahrzeugrumpf zwei sich gegenüberliegende Kopplungseinrichtungen 220 der beiden Bodenelemente 100 zu koppeln (zu verbinden).

Zudem ist in Figur 11 auch eine Querstrebe 15 dargestellt, die eine Abstützung eines Auflagers 6 zu einem benachbarten Spant 5 bildet, der sich von dem Spant 5, an dem das Auflager 6 befestigt ist, unterscheidet. Die Querstrebe 15 kann auf einer anderen Höhe als das Auflager 6 an dem benachbarten Spant 5 befestigt sein. Dadurch lassen sich auch Momente von dem Auflager 6 in die Primärstruktur 5 des Luftfahrzeugs 1 übertragen, beispielsweise aufgrund der Eintragung von Lasten zweier benachbarter Bodenbaugruppen 100 in das Auflager 6.

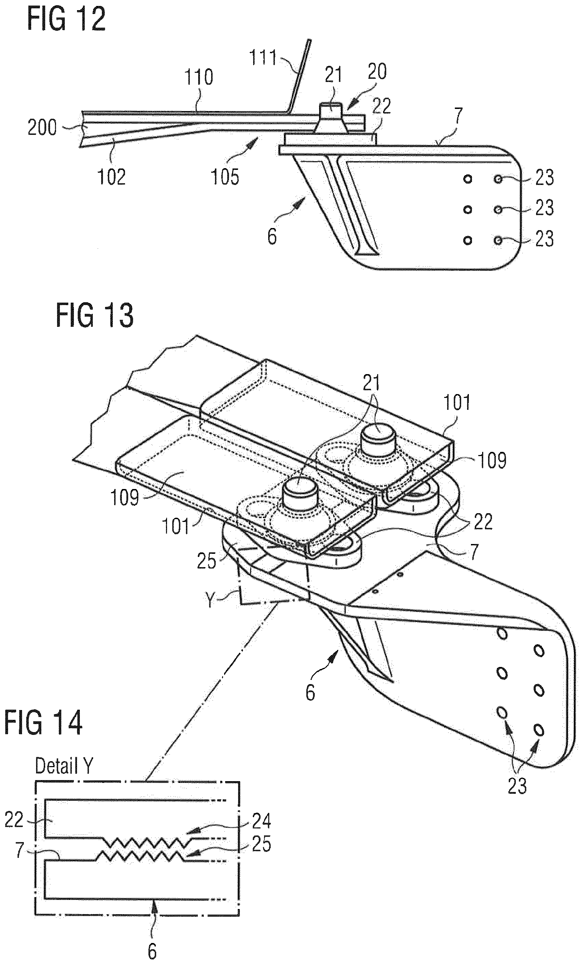

Figur 12 zeigt schematisch eine detaillierte Seitenansicht eines Auflagers 6 und eines Anschlusselements 105. Figur 13 zeigt schematisch eine perspektivische Ansicht des Auflagers 6 aus Figur 12 mit zwei Anschlusselementen105. Das Auflager 6 weist Anschlussmöglichkeiten 23 auf, mit denen das Auflager 6 an einem Spant 5 befestigt werden kann. Beispielsweise kann es sich um Bohrungen oder Löcher 23 handeln, durch die Befestigungsbolzen oder -schrauben zur Befestigung an dem Spant 5 geführt werden können. Selbstverständlich kann das Auflager 6 an dem Spant 5 auch mittels Kleben oder Verschweißen befestigt werden.

Die Auflagefläche 7 des Auflagers 6 weist eine asymmetrische Form auf, da das Auflager 6 auf einer Seite des Spants 5 in einfacher Weise befestigt werden kann, jedoch Platz für zwei symmetrisch zum Spant 5 angeordnete Bodenelemente 100 benötigt. Auf der Auflagefläche 7 ist ein Zahnprofil 25 vorgesehen, welches in Figur 14 detaillierter dargestellt ist. Das Zahnprofil 25 dient der Aufnahme eines korrespondierenden Zahnprofils 24 eines Bauteils 20 mit Dorn 21. Das Zahnprofil 24 des Bauteils 20 ist an einer Unterseite eines plattenförmigen Abschnitts 22 des Bauteils 20 vorgesehen. Durch die korrespondierenden Zahnprofile 24, 25 kann das Bauteil 20 auf der Auflagefläche 7 so angeordnet werden, dass es eine Position in Bezug auf den Spant 5 hat, in der Toleranzen zwischen zwei Spanten 5 ausgeglichen werden. Mit anderen Worten kann die Position des Bauteils 20 so gewählt werden, dass der Dorn 21 mit der Öffnung 106 eines Anschlusselements 105 zusammenfällt. Das Zahnprofil 24 eignet sich zur Anordnung zweier Bauteile 20, sodass zwei Dorne 21 für zwei benachbarte Anschlusselemente 105 optimal positioniert werden können. Erst anschließend können die Bauteile 20 an dem Auflager 6 befestigt werden, beispielsweise mittels Schrauben, Bolzen oder ähnlichen Befestigungsmitteln.

Figur 15 zeigt schematisch eine perspektivische Ansicht einer Kopplungseinrichtung 220. Insbesondere ist die Kopplungseinrichtung 220 am Ende einer Sitzschiene 120 angeordnet dargestellt, beispielsweise daran befestigt oder darin integriert. Die in Figur 15 dargestellte Kopplungseinrichtung 220 weist eine stirnseitige Platte auf, durch die ein Kopplungsbolzen 221 in einer entsprechenden Öffnung geführt ist. Der Kopplungsbolzen 221 kann alternativ auch ein fester (integraler) Bestandteil der stirnseitigen Platte sein. Die Länge des Kopplungsbolzens 221 ist so gewählt, dass er, wie in Figur 11 dargestellt, unter der Bodenplatte 110 hervorschaut.

Ferner kann die Kopplungseinrichtung 220 Ausgleichsringe 223 aufweisen, wodurch Toleranzen zwischen zwei benachbarten Kopplungseinrichtung 220 ausgeglichen werden können (in Figur 15 ist für eine bessere Übersichtlichkeit nur eine Kopplungseinrichtung 220 dargestellt). Die Ausgleichsringe 223 können aus einem elastischen Material gefertigt sein. Mit anderen Worten kann das Spiel des Kopplungsbolzens 221 in entsprechenden Kopplungseinrichtungen 220 ausgeglichen werden. Es können aber auch Toleranzen zweier benachbarter Bodenbaugruppen 100, und insbesondere der sich dann gegenüberliegenden Kopplungseinrichtungen 220, ausgeglichen werden. Ferner kann ein Sicherungsstift 225 vorgesehen sein, um den Kopplungsbolzen 221 vor einem Herausrutschen aus einer korrespondierenden Kopplungseinrichtung 220 zu schützen.

Figur 15 zeigt zudem ein Verbindungselement 300, welches in Figur 16 detaillierter dargestellt ist. Figur 16 zeigt zudem eine Kopplungseinrichtung 220 mit einer Bolzenaufnahme 222, wobei die Kopplungseinrichtung 220 ebenfalls an dem Ende einer Sitzschiene 120 angeordnet/befestigt ist.

Das Verbindungselement 300 dient der Verbindung mit einer Innenausbaukomponente 9, beispielsweise einer Rahmenstruktur 9 (Figur 6). Die Rahmenstruktur 9 kann über einen Kugelkopf 302 am unteren Ende des Verbindungselements 300 angeschlossen werden. Dabei kann der Kugelkopf 302 in Z-Richtung ein Spiel gegenüber der Rahmenstruktur 9 aufweisen, sodass die beiden angeschlossenen Bodenelemente 100 in Z-Richtung schwingen können und nur im Fall von extremeren Lasten (beispielsweise Crashlasten) eine mechanische Kopplung zwischen Kugelkopf 302 und Rahmenstruktur 9 eintritt. Das Verbindungselement 300 ist Gabel-förmig (bzw. U-förmig) ausgebildet, wodurch es sehr leicht und schnell in die zwei gegenüberliegenden Kopplungseinrichtungen 220 eingesetzt und durch den Kopplungsbolzen 221 gesichert wird. Dadurch kann die Anzahl der benötigten Bauteile zum Anschluss an die Rahmenstruktur 9 deutlich reduziert und der Einbau vereinfacht werden.

Die in den Figuren 15 und 16 nicht dargestellte zweite Kopplungseinrichtung 220 des benachbarten Bodenelements 100 kann in symmetrischer Weise mit dem Verbindungselement 300 zusammenwirken. So kann das Verbindungselement 300 nach Einbau zweier benachbarter Bodenelemente 100 von unten eingeschoben werden, sodass jeder Schenkel des Verbindungselements 300 auf einer Innenseite der jeweiligen Kopplungseinrichtung 220 liegt. Durch anschließendes Einschieben des Kopplungsbolzens 221 können sowohl die Kopplungseinrichtungen 220 beider Bodenelemente 100 als auch das Verbindungselement 300 verbunden werden.

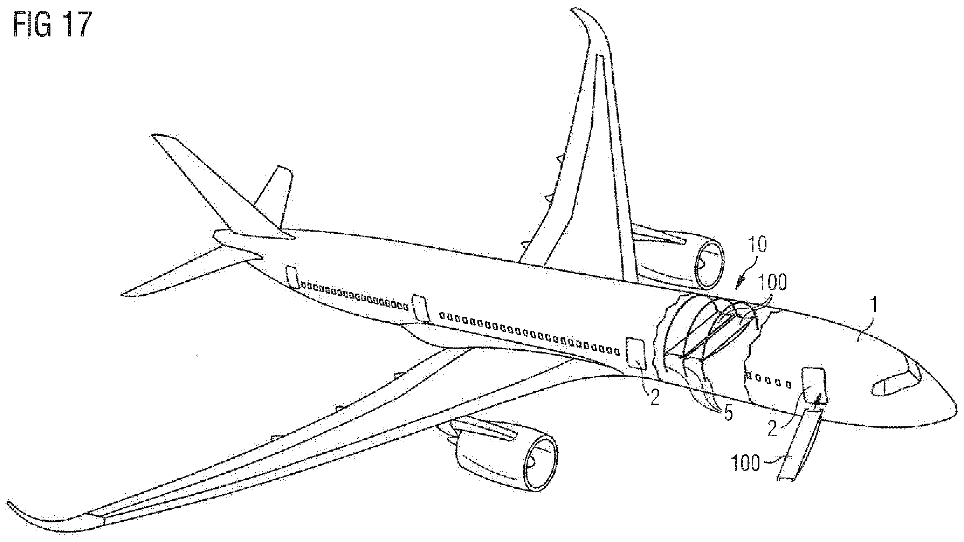

Figur 17 zeigt schematisch eine perspektivische Ansicht eines Luftfahrzeugs 1 mit einem exponierten Ausschnitt eines Luftfahrzeugbereichs 10 mit Bogenbaugruppen. So können Spante 5 den Querschnitt des Luftfahrzeugs 1 bilden. Zwischen jeweils zwei Spanten 5 kann ein selbsttragendes Bodenelement 100 angeordnet sein, welches an mindestens einem Spant 5 aufliegt.

Dadurch ist die Verwendung einer Bodenbaugruppe zur Installation eines Kabinenbodens in dem Luftfahrzeug 1 möglich, auch nachdem an einem Rumpf des Luftfahrzeugs vorzusehende Innenausbaukomponenten 9 angebracht worden sind. Ebenso ist die Verwendung einer Bodenbaugruppe zum Umbau eines Kabinenbodens des Luftfahrzeugs 1 möglich. So können speziell tragfähige Bodenelemente 100 in einem Bereich, in dem ein Monument vorzusehen ist, oder leichtere Bodenelemente 100 zur Anordnung von Passagiersitzreihen auch nachträglich eingesetzt oder ersetzt werden.

Die Bodenelemente 100 können eine Breite aufweisen, die in etwa dem Abstand zweier Spante 5 in Längsrichtung des Luftfahrzeugs 1 entspricht. Da auch eine Luke oder Tür 2 des Luftfahrzeugs 1 in der Regel zwischen zwei Spanten 5 angeordnet ist, lassen sich die Bodenelemente 100 durch solch eine Luke oder Tür 2 in das Innere des Luftfahrzeugs oder daraus heraus transportieren. Somit ist ein Umbau eines Kabinenbodens oder Frachtraumbodens eines bereits fertiggestellten Luftfahrzeugs 1 auch zu einem späteren Zeitpunkt möglich.

Abschließend sei insbesondere darauf hingewiesen, dass die voranstehend erörterten Varianten, Ausgestaltungen und Ausführungsbeispiele lediglich zur Beschreibung der beanspruchten Lehre dienen, diese jedoch nicht auf die Varianten, Ausgestaltungen und Ausführungsbeispiele einschränken.

## Patentansprüche

1. Bodenbaugruppe für ein Luftfahrzeug mit:
- einer Vielzahl von Auflagern (6), die dazu eingerichtet sind, paarweise an gegenüberliegenden Seiten eines Spants (5) des Luftfahrzeugs (1) befestigt zu werden; und
- einem monolithischen selbsttragenden Bodenelement (100) bestehend aus mindestens zwei Längsträgern (101, 200), einer auf den Längsträgern (101, 200) angeordneten Bodenplatte (110) und jeweils einem an jedem Ende jedes der Längsträger (101, 200) angeordneten Anschlusselement (105),
wobei jedes der Vielzahl von Auflagern (6) eine horizontale Auflagefläche (7), die so dimensioniert ist, dass ein oder zwei Anschlusselemente (105) darauf aufliegen können, aufweist und vertikale Lasten des einen oder der zwei aufliegenden Anschlusselemente (105) aufnimmt und in den Spant (5) überträgt,
wobei das Bodenelement (100) ausschließlich an dem Spant (5) durch Auflegen jedes Anschlusselements (105) auf zumindest einem Abschnitt der Auflagefläche (7) eines entsprechenden Auflagers (6) und durch Befestigen jedes Anschlusselements (105) an dem entsprechenden Auflager (6) befestigt ist, und
wobei sich die Bodenplatte (110) in Richtung der Längsträger (101) mindestens zwischen zwei paarweise befestigten Auflagern (6) erstreckt.

2. Bodenbaugruppe gemäß Anspruch 1, wobei das monolithische Bodenelement (100) zumindest abschnittsweise aus einem Verbundwerkstoff hergestellt ist, und/oder
wobei die Bodenplatte (110) an mindestens einem ihrer den Anschlusselementen (105) zugewandten Enden einen Fußwinkel (111) aufweist, der eine sich von den Längsträgern (101, 200) entfernende Fortsetzung der Bodenplatte (110) ist.

3. Bodenbaugruppe gemäß Anspruch 1 oder 2, wobei das monolithische Bodenelement (100) mindestens einen Querträger (108) umfasst, der senkrecht zu den Längsträgern (101, 200) angeordnet ist, und
wobei vorzugsweise das monolithische Bodenelement (100) mindestens eine Traverse (107) umfasst, die sich schräg zwischen den Längsträgern (101, 200) und dem Querträger (108) erstreckt.

4. Bodenbaugruppe gemäß einem der Ansprüche 1 bis 3, wobei jeder der Längsträger (101, 200) mindestens einen Steg und einen der Bodenplatte (110) gegenüberliegenden Flansch (102) aufweist, und
wobei vorzugsweise ein Bereich mindestens eines der Längsträger (101, 200) zwischen dem Steg und der Bodenplatte (110) eine Verstärkung (109) aufweist.

5. Bodenbaugruppe gemäß Anspruch 4, wobei der Steg einen in Längsrichtung des mindestens einen Längsträgers (101, 200) verlaufenden Schlitz (201) umfasst, und
wobei vorzugsweise der Schlitz (201) sich mittig in Längsrichtung des Längsträgers (101, 200) befindet, wobei ferner vorzugsweise der Schlitz (201) eine Höhe zwischen 3 und 10 mm, bevorzugt 5 mm, aufweist, und wobei ebenfalls vorzugsweise der Schlitz (201) in Längsrichtung des Längsträgers (101, 200) eine Länge aufweist, die einer Breite eines Passagiergangs in einem Luftfahrzeug (1) entspricht.

6. Bodenbaugruppe gemäß einem der Ansprüche 1 bis 5, wobei das Auflager (6) mindestens einen Vorsprung (8) aufweist, und wobei das Anschlusselement (105) eine Öffnung (106), die dazu eingerichtet ist, den Vorsprung (8) aufzunehmen, aufweist, oder
wobei das Auflager (6) mindestens eine Öffnung aufweist, und wobei das Anschlusselement (105) dazu eingerichtet ist, in die Öffnung des Auflagers (6) eingesetzt zu werden.

7. Bodenbaugruppe gemäß Anspruch 6, wobei der Vorsprung (8) durch ein separates Bauteil (20) mit Dorn (21) ausgebildet ist, das dazu eingerichtet ist, an dem Auflager (6) oder dem Anschlusselement (105) befestigt zu werden, und
wobei vorzugsweise das Bauteil (20) an einer dem Auflager (6) oder dem Anschlusselement (105) zugewandten Seite ein Zahnprofil (24) aufweist, das mit einem Zahnprofil (25) an dem Auflager (6) oder dem Anschlusselement (105) korrespondiert.

8. Bodenbaugruppe gemäß einem der Ansprüche 1 bis 5, ferner umfassend:
- eine Sitzschiene (120), die in der Bodenplatte (110) integriert ist, wobei vorzugsweise der Längsträger (101, 200) und/oder die Bodenplatte (110) eine Aussparung (103) aufweist, in der die Sitzschiene (120) verläuft.

9. Bodenbaugruppe gemäß einem der Ansprüche 1 bis 8, ferner umfassend:
- mindestens eine Kopplungseinrichtung (220), die an und/oder in einem der Längsträger (101, 200) angeordnet ist,
wobei die Kopplungseinrichtung (220) entweder einen Kopplungsbolzen (221), der sich von dem Längsträger (101, 200) senkrecht zu dessen Längsachse und von der Bodenplatte (110) weg erstreckt, oder eine Bolzenaufnahme (222), die sich senkrecht zu einer Längsachse des Längsträgers (101, 200) und in einen Bereich unterhalb der Bodenplatte (110) hinein erstreckt, aufweist,
wobei vorzugsweise, wenn die Bodenbaugruppe von Anspruch 8 abhängig ist, die Kopplungseinrichtung (220) an einem Ende der Sitzschiene (120) angebracht ist oder in der Sitzschiene (120) integriert ist.

10. Bodenbaugruppe gemäß Anspruch 9, wobei die Kopplungseinrichtung (220) dazu eingerichtet ist, ein Verbindungselement (300) aufzunehmen, das dazu eingerichtet ist, mit einer Innenausbaukomponente (9) verbunden zu werden.

11. Bodenbaugruppe gemäß einem der Ansprüche 1 bis 10, wobei das monolithische Bodenelement (100) eine Leitung (132) und/oder einen oder mehrere Anschlüsse (130, 131) für Versorgungsleitungen umfasst.

12. Luftfahrzeugbereich (10) mit:
- mindestens zwei in Längsrichtung des Luftfahrzeugs (1) parallel zueinander angeordneten Spanten (5); und
- mindestens einer Bodenbaugruppe gemäß einem der Ansprüche 1 bis 11.

13. Luftfahrzeugbereich (10) gemäß Anspruch 12, wobei eine Breite des Bodenelements (110) der mindestens einen Bodenbaugruppe in Längsrichtung des Luftfahrzeugs (1) einem Abstand der beiden Spanten (5) in Längsrichtung des Luftfahrzeugs (1) entspricht.

14. Luftfahrzeug (1) mit einem Luftfahrzeugbereich (10) gemäß Anspruch 12 oder 13.

15. Verwendung einer Bodenbaugruppe gemäß einem der Ansprüche 1 bis 11 zur Installation eines Kabinenbodens in einem Luftfahrzeug (1), nachdem an einem Rumpf des Luftfahrzeugs (1) vorzusehende Innenausbaukomponenten (9) angebracht worden sind.

## Claims

1. Floor assembly for an aircraft, comprising:
- a multiplicity of supports (6) which are configured to be fastened in pairs to opposite sides of a frame (5) of the aircraft (1); and
- a monolithic, self-supporting floor element (100) consisting of at least two longitudinal members (101, 200), a floor plate (110) arranged on the longitudinal members (101, 200) and a respective connecting element (105) arranged at each end of each of the longitudinal members (101, 200),
wherein each of the multiplicity of supports (6) has a horizontal supporting surface (7), which is dimensioned in such a manner that one or two connecting elements (105) can rest thereon, and absorbs vertical loads of the one or of the two connecting elements (105) resting thereon and transmits said loads into the frame (5),
wherein the floor element (100) is fastened exclusively to the frame (5) by placing of each connecting element (105) on at least one portion of the supporting surface (7) of a corresponding support (6) and by fastening of each connecting element (105) to the corresponding support (6), and
wherein the floor plate (110) extends in the direction of the longitudinal members (101) at least between two supports (6) fastened in pairs.

2. Floor assembly according to Claim 1, wherein the monolithic floor element (100) is produced at least in certain sections from a composite material, and/or
wherein the floor plate (110), at at least one of its ends facing the connecting elements (105), has a foot angle (111) which is a continuation of the floor plate (110) moving away from the longitudinal members (101, 200).

3. Floor assembly according to Claim 1 or 2, wherein the monolithic floor element (100) comprises at least one crossmember (108) which is arranged perpendicularly with respect to the longitudinal members (101, 200), and
wherein preferably the monolithic floor element (100) comprises at least one crossbar (107) which extends obliquely between the longitudinal members (101, 200) and the crossmember (108).

4. Floor assembly according to one of Claims 1 to 3, wherein each of the longitudinal members (101, 200) has at least one web and a flange (102) lying opposite the floor plate (110), and
wherein preferably a region of at least one of the longitudinal members (101, 200) between the web and the floor plate (110) has a reinforcement (109).

5. Floor assembly according to Claim 4, wherein the web comprises a slot (201) running in a longitudinal direction of the at least one longitudinal member (101, 200), and
wherein preferably the slot (201) is located centrally in the longitudinal direction of the longitudinal member (101, 200), wherein furthermore preferably the slot (201) has a height of between 3 and 10 mm, preferably 5 mm, and wherein likewise preferably the slot (201) has a length in the longitudinal direction of the longitudinal member (101, 200) that corresponds to a width of a passenger aisle in an aircraft (1).

6. Floor assembly according to one of Claims 1 to 5, wherein the support (6) has at least one projection (8), and wherein the connecting element (105) has an opening (106) which is configured to receive the projection (8), or
wherein the support (6) has at least one opening, and wherein the connecting element (105) is configured to be inserted into the opening of the support (6).

7. Floor assembly according to Claim 6, wherein the projection (8) is formed by a separate component (20) which has a stub (21) and which is configured to be fastened to the support (6) or to the connecting element (105), and
wherein preferably the component (20) has, on a side facing the support (6) or the connecting element (105), a tooth profile (24) which corresponds to a tooth profile (25) on the support (6) or the connecting element (105).

8. Floor assembly according to one of Claims 1 to 5, furthermore comprising:
- a seat rail (120) which is integrated in the floor plate (110),
wherein preferably the longitudinal member (101, 200) and/or the floor plate (110) has a cutout (103) in which the seat rail (120) runs.

9. Floor assembly according to one of Claims 1 to 8, furthermore comprising:
- at least one coupling device (220) which is arranged on and/or in one of the longitudinal members (101, 200),
wherein the coupling device (220) either has a coupling bolt (221) which extends away from the longitudinal member (101, 200) perpendicularly with respect to the longitudinal axis thereof and away from the floor plate (110), or a bolt receptacle (222) which extends perpendicularly with respect to a longitudinal axis of the longitudinal member (101, 200) and into a region below the floor plate (110),
wherein preferably, if the floor assembly is dependent on Claim 8, the coupling device (220) is attached to one end of the seat rail (120) or is integrated in the seat rail (120).

10. Floor assembly according to Claim 9, wherein the coupling device (220) is configured to receive a connection element (300) which is configured to be connected to an interior fitting component (9).

11. Floor assembly according to one of Claims 1 to 10, wherein the monolithic floor element (100) comprises a line (132) and/or one or more connections (130, 131) for supply lines.

12. Aircraft region (10), comprising:
- at least two frames (5) arranged parallel to one another in the longitudinal direction of the aircraft (1); and
- at least one floor assembly according to one of Claims 1 to 11.

13. Aircraft region (10) according to Claim 12, wherein a width of the floor element (110) of the at least one floor assembly in the longitudinal direction of the aircraft (1) corresponds to a distance between the two frames (5) in the longitudinal direction of the aircraft (1).

14. Aircraft (1) comprising an aircraft region (10) according to Claim 12 or 13.

15. Use of a floor assembly according to one of Claims 1 to 11 for installation of a cabin floor in an aircraft (1) after interior fitting components (9) that are to be provided have been attached to a fuselage of the aircraft (1).

## Revendications

1. Module de plancher pour un aéronef, comprenant :
- une pluralité d'appuis (6), qui sont conçus pour être fixés par paire sur des côtés opposés d'un châssis (5) de l'aéronef (1) ; et
- un élément de plancher autoporteur monolithique (100) constitué d'au moins deux supports longitudinaux (101, 200), d'un panneau de plancher (110) agencé sur les supports longitudinaux (101, 200) et à chaque fois d'un élément de raccordement (105) agencé à chaque extrémité de chaque support longitudinal (101, 200), chaque appui de la pluralité d'appuis (6) comprenant une surface d'appui horizontale (7), qui est dimensionnée de telle sorte qu'un ou deux éléments de raccordement (105) puissent venir en appui sur celle-ci, et recevant des charges verticales de l'un ou des deux éléments de raccordement en appui (105) et les transférant dans le châssis (5),
l'élément de plancher (100) étant fixé exclusivement sur le châssis (5) par appui de chaque élément de raccordement (105) sur au moins une section de la surface d'appui (7) d'un appui correspondant (6) et par fixation de chaque élément de raccordement (105) à l'appui correspondant (6), et
le panneau de plancher (110) s'étendant dans la direction des supports longitudinaux (101) au moins entre deux appuis (6) fixés par paire.

2. Module de plancher selon la revendication 1, dans lequel l'élément de plancher monolithique (100) est fabriqué au moins en sections en un matériau composite, et/ou
dans lequel le panneau de plancher (110) comprend une équerre de pied (111) à au moins une de ses extrémités tournées vers les éléments de raccordement (105), qui est un prolongement du panneau de plancher (110) s'éloignant des supports longitudinaux (101, 200).

3. Module de plancher selon la revendication 1 ou 2, dans lequel l'élément de plancher monolithique (100) comprend au moins un support transversal (108), qui est agencé perpendiculairement aux supports longitudinaux (101, 200), et
dans lequel l'élément de plancher monolithique (100) comprend de préférence au moins une traverse (107), qui s'étend en biais entre les supports longitudinaux (101, 200) et le support transversal (108).

4. Module de plancher selon l'une quelconque des revendications 1 à 3, dans lequel chacun des supports longitudinaux (101, 200) comprend au moins une entretoise et une bride (102) opposée au panneau de plancher (110), et
dans lequel une zone d'au moins un des supports longitudinaux (101, 200) entre l'entretoise et le panneau de plancher (110) comprend de préférence un renfort (109).

5. Module de plancher selon la revendication 4, dans lequel l'entretoise comprend une fente (201) s'étendant dans la direction longitudinale de l'au moins un support longitudinal (101, 200), et
dans lequel la fente (201) se trouve de préférence au milieu dans la direction longitudinale du support longitudinal (101, 200), dans lequel la fente (201) présente en outre de préférence une hauteur comprise entre 3 et 10 mm, de préférence 5 mm, et dans lequel la fente (201) présente également de préférence dans la direction longitudinale du support longitudinal (101, 200) une longueur qui correspond à une largeur d'un couloir de passagers dans un aéronef (1).

6. Module de plancher selon l'une quelconque des revendications 1 à 5, dans lequel l'appui (6) comprend au moins une protubérance (8), et dans lequel l'élément de raccordement (105) comprend une ouverture (106), qui est conçue pour recevoir la protubérance (8), ou
dans lequel l'appui (6) comprend au moins une ouverture, et dans lequel l'élément de raccordement (105) est conçu pour être inséré dans l'ouverture de l'appui (6).

7. Module de plancher selon la revendication 6, dans lequel la protubérance (8) est formée par un composant séparé (20) muni d'un mandrin (21), qui est conçu pour être fixé à l'appui (6) ou à l'élément de raccordement (105), et
dans lequel le composant (20) comprend de préférence un profil denté (24) sur un côté tourné vers l'appui (6) ou l'élément de raccordement (105), qui correspond à un profil denté (25) sur l'appui (6) ou l'élément de raccordement (105).

8. Module de plancher selon l'une quelconque des revendications 1 à 5, comprenant en outre :
- un rail de siège (120), qui est intégré dans le panneau de plancher (110), dans lequel le support longitudinal (101, 200) et/ou le panneau de plancher (110) comprennent de préférence un évidement (103), dans lequel le rail de siège (120) s'étend.

9. Module de plancher selon l'une quelconque des revendications 1 à 8, comprenant en outre :
- au moins un appareil de couplage (220), qui est agencé sur et/ou dans un des supports longitudinaux (101, 200),
dans lequel l'appareil de couplage (220) comprend soit un boulon de couplage (221), qui s'étend à partir du support longitudinal (101, 200) perpendiculairement à son axe longitudinal et à partir du panneau de plancher (110), soit un logement de boulon (222), qui s'étend perpendiculairement à un axe longitudinal du support longitudinal (101, 200) et dans une zone en dessous du panneau de plancher (110),
dans lequel, lorsque le module de plancher est dépendant de la revendication 8, l'appareil de couplage (220) est de préférence disposé à une extrémité du rail de siège (120) ou intégré dans le rail de siège (120).

10. Module de plancher selon la revendication 9, dans lequel l'appareil de couplage (220) est conçu pour recevoir un élément de liaison (300), qui est conçu pour être relié à un composant structural intérieur (9).

11. Module de plancher selon l'une quelconque des revendications 1 à 10, dans lequel l'élément de plancher monolithique (100) comprend une conduite (132) et/ou un ou plusieurs raccordements (130, 131) pour des conduites d'alimentation.

12. Zone d'aéronef (10) comprenant :
- au moins deux châssis (5) agencés parallèlement l'un à l'autre dans la direction longitudinale de l'aéronef (1) ; et
- au moins un module de plancher selon l'une quelconque des revendications 1 à 11.

13. Zone d'aéronef (10) selon la revendication 12, dans laquelle une largeur de l'élément de plancher (110) de l'au moins un module de plancher dans la direction longitudinale de l'aéronef (1) correspond à un écart des deux châssis (5) dans la direction longitudinale de l'aéronef (1).

14. Aéronef (1) comprenant une zone d'aéronef (10) selon la revendication 12 ou 13.

15. Utilisation d'un module de plancher selon l'une quelconque des revendications 1 à 11 pour l'installation d'un plancher de cabine dans un aéronef (1), après que des composants structuraux intérieurs prévus (9) aient été disposés sur une coque de l'aéronef (1).
